# EUROPEAN PATENT SPECIFICATION

(11) **EP 4 350 575 B1**
(45) Date of publication and mention of the grant of the patent: **28.10.2026**
(21) Application number: 22831866.3
(22) Date of filing: 24.06.2022
(51) Int. Cl.: G06V 10/44, G06V 10/80, G06V 10/82, G06F 18/2415, G06F 18/25, G06N 3/04, G06N 3/045, G06N 3/08

(54) **IMAGE CLASSIFICATION METHOD AND RELATED DEVICE THEREOF**
BILDKLASSIFIZIERUNGSVERFAHREN UND ZUGEHÖRIGE VORRICHTUNG DAFÜR
PROCÉDÉ DE CLASSIFICATION D'IMAGES ET SON DISPOSITIF ASSOCIÉ

(30) Priority: 30.06.2021 CN 202110745619
(43) Date of publication of application: 10.04.2024
(73) Proprietor: Huawei Technologies Co., Ltd., Shenzhen, Guangdong 518129 (CN)
(72) Inventor: LI, Aoxue, Shenzhen, Guangdong 518129 (CN); LI, Zhenguo, Shenzhen, Guangdong 518129 (CN)
(74) Representative: Thun, Clemens
(86) International application number: PCT/CN2022/101015
(87) International publication number: WO 2023/274052

(56) References cited:
- WO-A1-2020/259666
- CN-A- 108 460 389
- CN-A- 110 276 411
- CN-A- 113 627 422
- US-A1- 2021 390 695
- US-B1- 10 769 766
- ORIOL VINYALS ET AL: "Matching Networks for One Shot Learning", ARXIV.ORG, CORNELL UNIVERSITY LIBRARY, 201 OLIN LIBRARY CORNELL UNIVERSITY ITHACA, NY 14853, 13 June 2016 (2016-06-13), XP081350605
- LI AOXUE ET AL: "Transformation Invariant Few-Shot Object Detection", 2021 IEEE/CVF CONFERENCE ON COMPUTER VISION AND PATTERN RECOGNITION (CVPR), IEEE, 20 June 2021 (2021-06-20), pages 3093 - 3101, XP034006825, DOI: 10.1109/CVPR46437.2021.00311
- LI AOXUE ET AL: "Few-Shot Learning With Global Class Representations", 2019 IEEE/CVF INTERNATIONAL CONFERENCE ON COMPUTER VISION (ICCV), IEEE, 27 October 2019 (2019-10-27), pages 9714 - 9723, XP033723383, DOI: 10.1109/ICCV.2019.00981
- LI LINGJUN ET AL: "DLA-MatchNet for Few-Shot Remote Sensing Image Scene Classification", IEEE TRANSACTIONS ON GEOSCIENCE AND REMOTE SENSING, IEEE, USA, vol. 59, no. 9, 6 November 2020 (2020-11-06), pages 7844 - 7853, XP011874468, ISSN: 0196-2892, [retrieved on 20210826], DOI: 10.1109/TGRS.2020.3033336

## Description

This application claims priority to Chinese Patent Application No. 202110745619.5, filed with the China National Intellectual Property Administration on June 30, 2021 and entitled "IMAGE CLASSIFICATION METHOD AND RELATED DEVICE THEREOF".

### TECHNICAL FIELD

This application relates to the field of artificial intelligence (artificial intelligence, AI) technologies, and in particular, to an image classification method and a related device thereof.

### BACKGROUND

Image object detection is one of the important tasks of computer vision, and has important applications in fields such as self-driving and industrial vision. For a detection task of a specific type of objects (for example, an industrial machine or a power grid device), obtaining an image of this type of objects is costly. Therefore, only a small quantity of images can be obtained. Therefore, a small-sample object detection technology emerges.

A neural network model used in the small-sample object detection technology includes two branches. An input of one branch is a reference image (which may also be referred to as a support image), and an input of the other branch is a to-be-classified image (which may also be referred to as a query image). When the model classifies the to-be-classified image, a large quantity of reference images belonging to a basic category and a small quantity of reference images belonging to a new category are usually input. Under the actions of these reference images, the model may detect that a category of the to-be-classified image is the basic category or the new category.

In an image classification process, a quantity of reference images belonging to the basic category greatly differs from a quantity of reference images belonging to the new category. The model is prone to ignoring impact caused by the reference image of the new category. When the category of the to-be-classified image is actually the new category, the model is prone to determining the to-be-classified image as the basic category by mistake, resulting in low accuracy of image classification.

A publication of Oriol Vinyals, Charles Blundell, Timothy Lillicrap, Koray Kavukcuoglu, Daan Wierstra "Matching Networks for One Shot Learning", arxiv:1606.04080, Cornell University Library, 201 Olin Library Cornell University Ithaca, NY 14853, 13 June 2016 (2016-06-13) relates to learning problems on vision.

WO 2020/259666 relates to an image classification technique which includes determining a first image feature of a target image and a second image feature of a reference image in the same manner; and fusing the first image feature and the second image feature to determine a feature of an image to be classified.

### SUMMARY

Embodiments of this application are set out in the appended claims and provide an image classification method and a related device thereof, to accurately identify an image belonging to a new category, and not to determine the image belonging to the new category as an image belonging to a basic category by mistake, thereby improving accuracy of image classification.

A first aspect of embodiments of this application provides an image classification method, where the method is implemented by using an image classification model, and the method includes:

When a category of a to-be-classified image needs to be determined, a reference image related to the to-be-classified image may be first obtained.

After the to-be-classified image and the reference image are obtained, the reference image and the to-be-classified image may be input to the image classification model, to obtain a first feature of the reference image and a second feature of the to-be-classified image by using the image classification model.

Then, a third feature of the to-be-classified image is generated based on the first feature of the reference image and the second feature of the to-be-classified image by using the image classification model.

Then, by using the image classification model, a first classification result of the reference image is generated based on the first feature of the reference image, and a second classification result of the to-be-classified image is generated based on the third feature of the to-be-classified image. The first classification result may be considered as a final classification result of the reference image (that is, one output of the image classification model). Therefore, a category of the reference image may be determined based on the first classification result. The second classification result may be considered as a preliminary classification result of the to-be-classified image. In this application, the result is not used to determine the category of the to-be-classified image.

Finally, a third classification result (that is, another output of the image classification model) is generated based on the first classification result of the reference image and the second classification result of the to-be-classified image by using the image classification model. The third classification result may be considered as a final classification result of the to-be-classified image. Therefore, the category of the to-be-classified image may be determined based on the third classification result.

It can be learned from the foregoing method that, after the reference image and the to-be-classified image are input to the image classification model, the image classification model may perform the following steps: obtaining the first feature of the reference image and the second feature of the to-be-classified image; then generating the third feature based on the first feature and the second feature; then generating the first classification result based on the first feature, where the first classification result may be used to determine the category of the reference image, and generating the second classification result based on the third feature; finally generating the third classification result based on the first classification result and the second classification result; and determining the category of the to-be-classified image based on the obtained third classification result. It can be learned that, in a process in which the image classification model generates the third classification result of the to-be-classified image, the first classification result of the reference image is integrated. This is equivalent to that the image classification model focuses on category information of the reference image. Regardless of whether the category of the reference image belongs to a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

In a possible implementation, the generating the third classification result based on the first classification result and the second classification result includes: performing addition processing on the first classification result and the second classification result to obtain a fourth classification result; performing addition processing on the first classification result and a model parameter of the image classification model to obtain a fifth classification result; performing multiplication processing on the fifth classification result and a preset weight parameter to obtain a sixth classification result; and performing subtraction processing on the fourth classification result and the sixth classification result to obtain the third classification result. In the foregoing implementation, the second classification result of the to-be-classified image is adjusted by using the first classification result of the reference image (that is, the first classification result and the second classification result are added), to obtain the fourth classification result of the to-be-classified image. However, if the category of the reference image is the same as the category of the to-be-classified image, the first classification result of the reference image has a positive adjustment effect on the second classification result of the to-be-classified image. If the category of the reference image is different from the category of the to-be-classified image, the first classification result of the reference image has a negative adjustment effect on the second classification result of the to-be-classified image. To make the final classification result of the to-be-classified image accurate enough, impact brought by the two cases needs to be balanced. Specifically, after the fourth classification result of the to-be-classified image is obtained, a series of processing may be performed: performing addition processing on the first classification result of the reference image and the model parameter of the image classification model to obtain the fifth classification result of the reference image; performing multiplication processing on the fifth classification result of the reference image and the preset weight parameter to obtain a sixth classification result of the reference image; and performing subtraction processing on the fourth classification result of the to-be-classified image and the sixth classification result of the reference image to obtain the third classification result of the to-be-classified image. In this way, the third classification result of the to-be-classified image has sufficient accuracy, and may be considered as the final classification result of the to-be-classified image. Therefore, the category of the to-be-classified image may be determined based on the third classification result.

In a possible implementation, the generating the third classification result based on the first classification result and the second classification result includes: The image classification model directly performs addition on the first classification result of the reference image and the second classification result of the to-be-classified image to obtain the third classification result of the to-be-classified image. The third classification result of the to-be-classified image may be considered as the final classification result of the to-be-classified image. Therefore, the category of the to-be-classified image may be determined based on the third classification result.

In a possible implementation, the generating the first classification result based on the first feature includes: calculating, based on the first feature of the reference image, a probability that the reference image belongs to each category, to obtain the first classification result of the reference image. Because the first classification result of the reference image includes the probability that the reference image belongs to each category (that is, a probability that a target object presented in the reference image belongs to each category), the category of the reference image may be determined based on the first classification result. Further, the first classification result may further include location information of the target object in the reference image.

The generating the second classification result based on the third feature includes: calculating, based on the third feature of the to-be-classified image, a probability that the to-be-classified image belongs to each category, to obtain the second classification result of the to-be-classified image. Because the second classification result of the to-be-classified image includes the probability that the to-be-classified image belongs to each category (that is, a probability that a target object presented in the to-be-classified image belongs to each category), the second classification result may be used to determine the category of the to-be-classified image (but the second classification result is not used to determine the category of the to-be-classified image in this embodiment of this application). Further, the second classification result may further include location information of the target object in the to-be-classified image.

In a possible implementation, the generating the third feature based on the first feature and the second feature includes: performing feature fusion processing on the first feature of the reference image and the second feature of the to-be-classified image to obtain the third feature of the to-be-classified image.

In a possible implementation, the feature fusion processing includes at least one of addition processing, multiplication processing, subtraction processing, concatenation processing, and concatenation convolution processing.

In a possible implementation, the obtaining the first feature of the reference image and the second feature of the to-be-classified image includes: performing feature extraction processing on the reference image to obtain the first feature of the reference image; and performing feature extraction processing on the to-be-classified image to obtain the second feature of the to-be-classified image.

A second aspect of embodiments of this application provides a model training method. The method includes: obtaining a reference image and a to-be-classified image; inputting the reference image and the to-be-classified image to a to-be-trained model to obtain a third classification result of the to-be-classified image, where the to-be-trained model is configured to: obtain a first feature of the reference image and a second feature of the to-be-classified image; generate a third feature based on the first feature and the second feature; generate a first classification result based on the first feature; generate a second classification result based on the third feature; and generate the third classification result based on the first classification result and the second classification result; determining a first predicted category of the reference image based on the first classification result, and determining a second predicted category of the to-be-classified image based on the third classification result; obtaining a target loss based on a first reality category of the reference image, the first predicted category of the reference image, a second reality category of the to-be-classified image, and the second predicted category of the to-be-classified image, where the target loss indicates a difference between the first reality category and the first predicted category, and a difference between the second reality category and the second predicted category; and updating a model parameter of the to-be-trained model based on the target loss until a model training condition is met, to obtain an image classification model.

The image classification model obtained based on the foregoing method has a capability of classifying the to-be-classified image by using the reference image. In an image classification process, the image classification model may focus on category information of the reference image. Regardless of whether a category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

In a possible implementation, the obtaining a target loss based on a first reality category of the reference image, the first predicted category of the reference image, a second reality category of the to-be-classified image, and the second predicted category of the to-be-classified image includes: obtaining a first sub-loss based on the first reality category and the first predicted category of the reference image, where the first sub-loss indicates the difference between the first reality category and the first predicted category; obtaining a second sub-loss based on the second reality category and the second predicted category of the to-be-classified image, where the second sub-loss indicates the difference between the second reality category and the second predicted category; and performing addition processing on the first sub-loss and the second sub-loss to obtain the target loss.

In a possible implementation, the to-be-trained model is configured to perform addition processing on the first classification result and the second classification result to obtain the third classification result.

In a possible implementation, the to-be-trained model is configured to: calculate, based on the first feature, a probability that the reference image belongs to each category, to obtain the first classification result; and calculate, based on the third feature, a probability that the to-be-classified image belongs to each category, to obtain the second classification result.

In a possible implementation, the to-be-trained model is configured to perform feature fusion processing on the first feature and the second feature to obtain the third feature.

In a possible implementation, the feature fusion processing includes at least one of addition processing, multiplication processing, subtraction processing, concatenation processing, and concatenation convolution processing.

In a possible implementation, the to-be-trained model is configured to: perform feature extraction processing on the reference image to obtain the first feature; and perform feature extraction processing on the to-be-classified image to obtain the second feature.

A third aspect of embodiments of this application provides an image classification apparatus. The apparatus includes: a feature extraction module, configured to obtain a first feature of a reference image and a second feature of a to-be-classified image; a feature fusion module, configured to generate a third feature based on the first feature and the second feature; a first classification module, configured to generate a first classification result based on the first feature, where the first classification result is used to determine a category of the reference image; a second classification module, configured to generate a second classification result based on the third feature; and a classification result adjustment module, configured to generate a third classification result based on the first classification result and the second classification result, where the third classification result is used to determine a category of the to-be-classified image.

It can be learned from the foregoing apparatus that, after the reference image and the to-be-classified image are input to an image classification model, the image classification model may perform the following steps: obtaining the first feature of the reference image and the second feature of the to-be-classified image; then generating the third feature based on the first feature and the second feature; then generating the first classification result based on the first feature, where the first classification result may be used to determine the category of the reference image, and generating the second classification result based on the third feature; finally generating the third classification result based on the first classification result and the second classification result; and determining the category of the to-be-classified image based on the obtained third classification result. It can be learned that, in a process in which the image classification model generates the third classification result of the to-be-classified image, the first classification result of the reference image is integrated. This is equivalent to that the image classification model focuses on category information of the reference image. Regardless of whether the category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

In a possible implementation, the classification result adjustment module is configured to perform addition processing on the first classification result and the second classification result to obtain the third classification result.

In a possible implementation, the classification result adjustment module is configured to: perform addition processing on the first classification result and the second classification result to obtain a fourth classification result; perform addition processing on the first classification result and a model parameter of the image classification model to obtain a fifth classification result; perform multiplication processing on the fifth classification result and a preset weight parameter to obtain a sixth classification result; and perform subtraction processing on the fourth classification result and the sixth classification result to obtain the third classification result.

In a possible implementation, the first classification module is configured to calculate, based on the first feature, a probability that the reference image belongs to each category, to obtain the first classification result; and the second classification module is configured to calculate, based on the third feature, a probability that the to-be-classified image belongs to each category, to obtain the second classification result.

In a possible implementation, the feature fusion module is configured to perform feature fusion processing on the first feature and the second feature to obtain the third feature.

In a possible implementation, the feature fusion processing includes at least one of addition processing, multiplication processing, subtraction processing, concatenation processing, and concatenation convolution processing.

In a possible implementation, the feature extraction module includes a first feature extraction module and a second feature extraction module. The first feature extraction module is configured to perform feature extraction processing on the reference image to obtain the first feature, and the second feature extraction module is configured to perform feature extraction processing on the to-be-classified image to obtain the second feature.

A fourth aspect of embodiments of this application provides a model training apparatus. The apparatus includes: an obtaining module, configured to obtain a reference image and a to-be-classified image; a processing module, configured to input the reference image and the to-be-classified image to a to-be-trained model to obtain a third classification result of the to-be-classified image, where the to-be-trained model is configured to: obtain a first feature of the reference image and a second feature of the to-be-classified image; generate a third feature based on the first feature and the second feature; generate a first classification result based on the first feature; generate a second classification result based on the third feature; and generate a third classification result based on the first classification result and the second classification result; a determining module, configured to determine a first predicted category of the reference image based on the first classification result, and determine a second predicted category of the to-be-classified image based on the third classification result; a computation module, configured to obtain a target loss based on a first reality category of the reference image, the first predicted category of the reference image, a second reality category of the to-be-classified image, and the second predicted category of the to-be-classified image, where the target loss indicates a difference between the first reality category and the first predicted category, and a difference between the second reality category and the second predicted category; and an update module, configured to update a model parameter of the to-be-trained model based on the target loss until a model training condition is met, to obtain an image classification model.

The image classification model obtained based on the foregoing apparatus has a capability of classifying the to-be-classified image by using the reference image. In an image classification process, the image classification model may focus on category information of the reference image. Regardless of whether a category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

In a possible implementation, the computation module is configured to: obtain a first sub-loss based on the first reality category and the first predicted category of the reference image, where the first sub-loss indicates the difference between the first reality category and the first predicted category; obtain a second sub-loss based on the second reality category and the second predicted category of the to-be-classified image, where the second sub-loss indicates the difference between the second reality category and the second predicted category; and perform addition processing on the first sub-loss and the second sub-loss to obtain the target loss.

In a possible implementation, the to-be-trained model is configured to perform addition processing on the first classification result and the second classification result to obtain the third classification result.

In a possible implementation, the to-be-trained model is configured to: calculate, based on the first feature, a probability that the reference image belongs to each category, to obtain the first classification result; and calculate, based on the third feature, a probability that the to-be-classified image belongs to each category, to obtain the second classification result.

In a possible implementation, the to-be-trained model is configured to perform feature fusion processing on the first feature and the second feature to obtain the third feature.

In a possible implementation, the feature fusion processing includes at least one of addition processing, multiplication processing, subtraction processing, concatenation processing, and concatenation convolution processing.

In a possible implementation, the to-be-trained model is configured to: perform feature extraction processing on the reference image to obtain the first feature; and perform feature extraction processing on the to-be-classified image to obtain the second feature.

A fifth aspect of embodiments of this application provides an image classification apparatus. The apparatus includes a memory and a processor. The memory stores code, the processor is configured to execute the code, and when the code is executed, the image classification apparatus performs the method according to any one of the first aspect or the possible implementations of the first aspect.

A sixth aspect of embodiments of this application provides a model training apparatus. The apparatus includes a memory and a processor. The memory stores code, the processor is configured to execute the code, and when the code is executed, the model training apparatus performs the method according to any one of the second aspect or the possible implementations of the second aspect.

A seventh aspect of embodiments of this application provides a circuit system. The circuit system includes a processing circuit. The processing circuit is configured to perform the method according to any one of the first aspect, the possible implementations of the first aspect, the second aspect, or the possible implementations of the second aspect.

An eighth aspect of embodiments of this application provides a chip system. The chip system includes a processor. The processor is configured to invoke a computer program or computer instructions stored in a memory, so that the processor performs the method according to any one of the first aspect, the possible implementations of the first aspect, the second aspect, or the possible implementations of the second aspect.

In a possible implementation, the processor is coupled to the memory through an interface.

In a possible implementation, the chip system further includes a memory. The memory stores a computer program or computer instructions.

A ninth aspect of embodiments of this application provides a computer storage medium. The computer storage medium stores a computer program. When the program is executed by a computer, the computer is enabled to perform the method according to any one of the first aspect, the possible implementations of the first aspect, the second aspect, or the possible implementations of the second aspect.

A tenth aspect of embodiments of this application provides a computer program product. The computer program product stores instructions. When the instructions are executed by a computer, the computer is enabled to perform the method according to any one of the first aspect, the possible implementations of the first aspect, the second aspect, or the possible implementations of the second aspect.

In embodiments of this application, after a reference image and a to-be-classified image are input to an image classification model, the image classification model may perform the following steps: obtaining a first feature of the reference image and a second feature of the to-be-classified image; then generating a third feature based on the first feature and the second feature; then generating a first classification result based on the first feature, where the first classification result may be used to determine a category of the reference image, and generating a second classification result based on the third feature; finally generating a third classification result based on the first classification result and the second classification result; and determining a category of the to-be-classified image based on the obtained third classification result. It can be learned that, in a process in which the image classification model generates the third classification result of the to-be-classified image, the first classification result of the reference image is integrated. This is equivalent to that the image classification model focuses on category information of the reference image. Regardless of whether the category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

### BRIEF DESCRIPTION OF DRAWINGS

FIG. 1 is a schematic diagram of a structure of an artificial intelligence main framework;
FIG. 2a is a schematic diagram of a structure of an image processing system according to an embodiment of this application;
FIG. 2b is another schematic diagram of a structure of an image processing system according to an embodiment of this application;
FIG. 2c is a schematic diagram of an image processing related device according to an embodiment of this application;
FIG. 3 is a schematic diagram of an architecture of a system 100 according to an embodiment of this application;
FIG. 4 is a schematic flowchart of an image classification method according to an embodiment of this application;
FIG. 5 is a schematic diagram of a structure of an image classification model according to an embodiment of this application;
FIG. 6 is a schematic diagram of an effect diagram according to an embodiment of this application;
FIG. 7 is a schematic flowchart of a model training method according to an embodiment of this application;
FIG. 8 is a schematic diagram of a structure of an image classification apparatus according to an embodiment of this application;
FIG. 9 is a schematic diagram of a structure of a model training apparatus according to an embodiment of this application;
FIG. 10 is a schematic diagram of a structure of an execution device according to an embodiment of this application;
FIG. 11 is a schematic diagram of a structure of a training device according to an embodiment of this application; and
FIG. 12 is a schematic diagram of a structure of a chip according to an embodiment of this application.

### DESCRIPTION OF EMBODIMENTS

Embodiments of this application provide an image classification method and a related device thereof, to accurately identify an image belonging to a new category, and not to determine the image belonging to the new category as an image belonging to a basic category by mistake, thereby improving accuracy of image classification.

In the specification, claims, and the accompanying drawings of this application, the terms "first", "second", and the like are intended to distinguish similar objects but do not necessarily indicate a specific order or sequence. It should be understood that the terms used in such a way are interchangeable in proper circumstances, and this is merely a discrimination manner for describing objects having a same attribute in embodiments of this application. In addition, the terms "include", "contain" and any other variants mean to cover the non-exclusive inclusion, so that a process, method, system, product, or device that includes a series of units is not necessarily limited to those units, but may include other units not expressly listed or inherent to such a process, method, system, product, or device.

Object detection on images is one of the important tasks of computer vision, and has important applications in fields such as self-driving and industrial vision. For a detection task of a specific type of objects (for example, an industrial machine or a power grid device), costs for obtaining an image of the type of objects are huge. Therefore, only a small quantity of images can be obtained. Therefore, a small sample object detection technology emerges.

A neural network model used in an image object detection technology includes two branches. An input of one branch is a reference image (which may also be referred to as a support image), and an input of the other branch is a to-be-classified image (which may also be referred to as a query image). In a training process of the model, the reference image usually includes a large quantity of images belonging to the basic category and a small quantity of images belonging to the new category. The model is trained by jointly using the reference image and the to-be-classified image, so that the trained model has a capability of detecting whether the image belongs to the basic category or the new category. For example, the basic category may be a common transportation, including a vehicle, a bicycle, a motorcycle, and the like, and the new category is a less common transportation, including an airplane, a high-speed railway, and the like.

In the foregoing training process, because there are a large quantity of images of the basic category and a small quantity of images of the new category, when the trained model performs image classification, an image belonging to the new category is prone to being determined as an image of the basic category by mistake, resulting in a poor image classification effect. Still as in the foregoing example, a large quantity of vehicle images, bicycle images, and motorcycle images are used in the model training process, and only a small quantity of airplane images are used. In this case, when an airplane image is input to a trained model for classification, the model is prone to determining a category of the image as one of a vehicle, a bicycle, and a motorcycle by mistake.

To resolve the foregoing problem, this application provides an image classification method. The method may be implemented with reference to an artificial intelligence (artificial intelligence, AI) technology. The AI technology is a technical discipline that is used to simulate, extend, and expand human intelligence by using a digital computer or a machine controlled by a digital computer. The AI technology obtains an optimal result by sensing the environment, obtaining knowledge, and using knowledge. In other words, the artificial intelligence technology is a branch of computer science, and is intended to understand essence of intelligence and produce a new intelligent machine that can react in a manner similar to human intelligence. Using artificial intelligence for image processing is a common application manner of artificial intelligence.

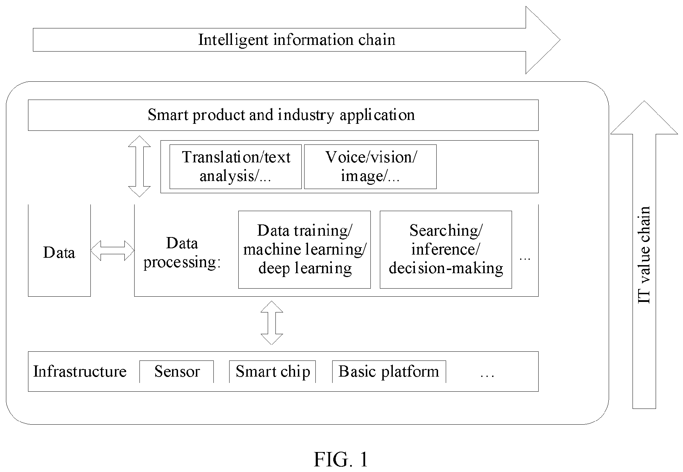

An overall working procedure of an artificial intelligence system is first described with reference to FIG. 1. FIG. 1 is a schematic diagram of a structure of an artificial intelligence main framework. The following describes the artificial intelligence main framework from two dimensions: an "intelligent information chain" (a horizontal axis) and an "IT value chain" (a vertical axis). The "intelligent information chain" reflects a series of processes from obtaining data to processing the data. For example, the process may be a general process of intelligent information perception, intelligent information representation and formation, intelligent inference, intelligent decision-making, and intelligent execution and output. In this process, the data undergoes a refinement process of "data-information-knowledge-intelligence". The "IT value chain" reflects a value brought by artificial intelligence to the information technology industry from an underlying infrastructure and information (technology providing and processing implementation) of artificial intelligence to an industrial ecological process of a system.

### (1) Infrastructure

The infrastructure provides computing capability support for the artificial intelligence system, implements communication with the external world, and implements support by using a basic platform. The infrastructure communicates with the outside by using a sensor. A computing capability is provided by a smart chip (a hardware acceleration chip such as a CPU, an NPU, a GPU, an ASIC, or an FPGA). The basic platform includes related platforms, for example, a distributed computing framework and a network, for assurance and support. The basic platforms may include a cloud storage and computing network, an interconnection network, and the like. For example, the sensor communicates with the outside to obtain data, and the data is provided for the smart chip in a distributed computing system provided by the basic platform for computing.

### (2) Data

Data at an upper layer of the infrastructure indicates a data source in the field of artificial intelligence. The data relates to a graph, an image, speech, and text, further relates to internet of things data of a conventional device, and includes service data of an existing system and perception data such as a force, displacement, a liquid level, a temperature, and humidity.

### (3) Data processing

Data processing usually includes a manner such as data training, machine learning, deep learning, searching, inference, or decision-making.

Machine learning and deep learning may mean performing symbolic and formalized intelligent information modeling, extraction, preprocessing, training, and the like on data.

Inference is a process in which a human intelligent inference manner is simulated in a computer or an intelligent system, and machine thinking and problem resolving are performed by using formal information according to an inference control policy. A typical function is searching and matching.

Decision-making is a process in which a decision is made after intelligent information is inferred, and usually provides functions such as classification, ranking, and prediction.

### (4) General capability

After data processing mentioned above is performed on data, some general capabilities may be further formed based on a data processing result, for example, an algorithm or a general system, such as translation, text analysis, computer vision processing, voice recognition, and image recognition.

### (5) Smart product and industry application

The smart product and industry application are products and applications of the artificial intelligence system in various fields. The smart product and industry application involve packaging overall artificial intelligence solutions, to productize and apply intelligent information decision-making. Application fields of the intelligent information decision-making mainly include smart terminals, smart transportation, smart health care, autonomous driving, smart cities, and the like.

The following describes several application scenarios of this application.

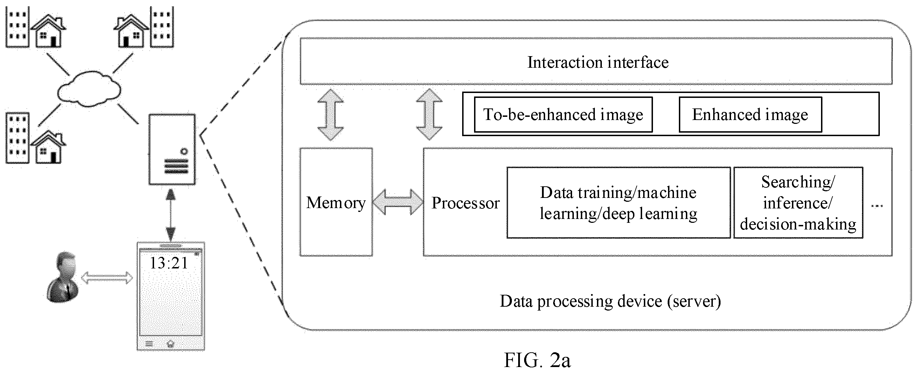

FIG. 2a is a schematic diagram of a structure of an image processing system according to an embodiment of this application. The image processing system includes user equipment and a data processing device. The user equipment includes a smart terminal such as a mobile phone, a personal computer, or an information processing center. The user equipment is an initiating end of image processing. As an initiator of a request for image processing, a user usually initiates the request by using the user equipment.

The data processing device may be a device or a server with a data processing function, such as a cloud server, a network server, an application server, or a management server. The data processing device receives the image processing request from the smart terminal through an interaction interface, and then performs, by using a memory storing data and a processor processing data, image processing in a manner of machine learning, deep learning, searching, inference, decision-making, or the like. The memory in the data processing device may be a general name, and includes a local storage and a database storing historical data. The database may be in the data processing device, or may be in another network server.

In the image processing system shown in FIG. 2a, the user equipment may receive an instruction from the user. For example, the user equipment may obtain an image input/selected by the user, and then initiate a request to the data processing device, so that the data processing device performs an image processing application (for example, image object detection) on the image obtained by the user equipment, to obtain a corresponding processing result for the image. For example, the user equipment may obtain an image input by the user, and then initiate an image object detection request to the data processing device, so that the data processing device classifies the image, to obtain a category to which the image belongs, that is, a category to which an object presented in the image belongs.

In FIG. 2a, the data processing device may perform the image processing method in this embodiment of this application.

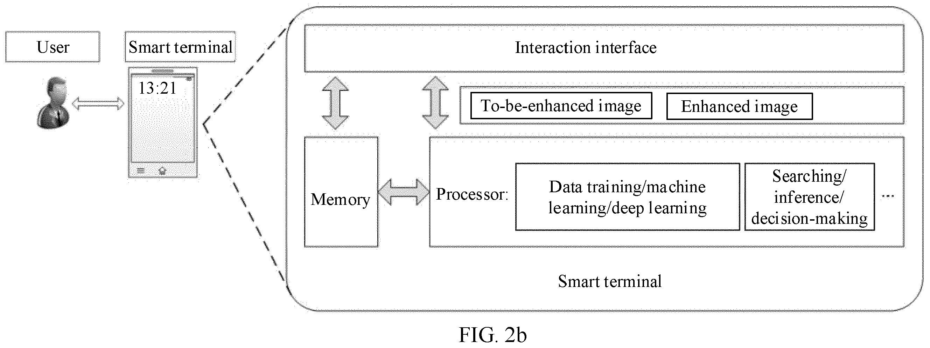

FIG. 2b is another schematic diagram of a structure of an image processing system according to an embodiment of this application. In FIG. 2b, user equipment is directly used as a data processing device. The user equipment can directly obtain an input from a user, and the input is directly processed by hardware of the user equipment. A specific process is similar to that in FIG. 2a. For details, refer to the foregoing descriptions. Details are not described herein again.

In the image processing system shown in FIG. 2b, the user equipment may receive an instruction from the user. For example, the user equipment may obtain an image selected by the user from the user equipment, and then the user equipment performs an image processing application (for example, image target detection) on the image, to obtain a corresponding processing result for the image.

In FIG. 2b, the user equipment may perform the image processing method in this embodiment of this application.

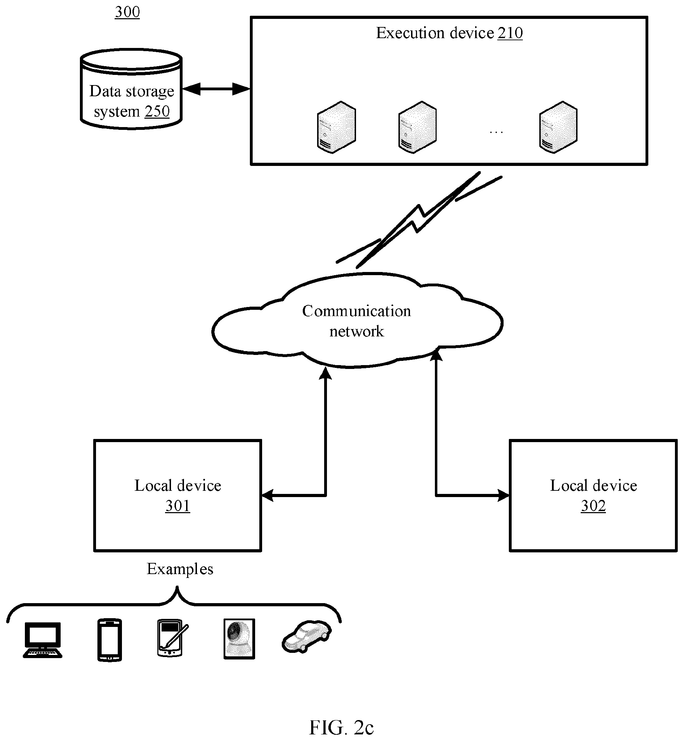

FIG. 2c is a schematic diagram of an image processing related device according to an embodiment of this application.

The user equipment in FIG. 2a and FIG. 2b may be specifically a local device 301 or a local device 302 in FIG. 2c. The data processing device in FIG. 2a may be specifically an execution device 210 in FIG. 2c. A data storage system 250 may store to-be-processed data of the execution device 210. The data storage system 250 may be integrated into the execution device 210, or may be disposed on a cloud or another network server.

The processor in FIG. 2a and FIG. 2b may perform data training/machine learning/deep learning by using a neural network model or another model (for example, a model based on a support vector machine), and perform an image processing application on an image by using a final model that is obtained through data training or learning with data, to obtain a corresponding processing result.

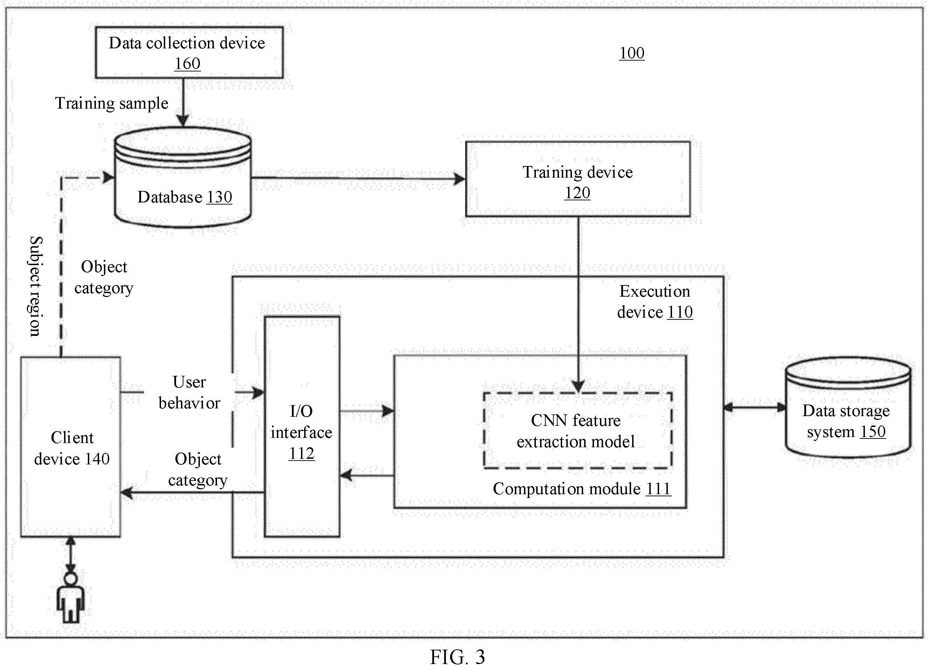

FIG. 3 is a schematic diagram of an architecture of a system 100 according to an embodiment of this application. In FIG. 3, an execution device 110 is provided with an input/output (input/output, I/O) interface 112, configured to exchange data with an external device. A user may input data to the I/O interface 112 by using a client device 140. The input data in this embodiment of this application may include each to-be-scheduled task, a resource that can be invoked, and another parameter.

In a process in which the execution device 110 preprocesses the input data, or in a process in which a computation module 111 of the execution device 110 performs related processing such as computing (for example, performs function implementation of a neural network in this application), the execution device 110 may invoke data, code, and the like in a data storage system 150 for corresponding processing, and may further store, in the data storage system 150, data, an instruction, and the like that are obtained through the corresponding processing.

Finally, the I/O interface 112 returns a processing result to the client device 140, to provide the processing result for the user.

It should be noted that a training device 120 may generate corresponding target models/rules for different targets or different tasks based on different training data. The corresponding target models/rules may be used to implement the foregoing targets or complete the foregoing tasks, to provide a required result for the user. The training data may be stored in a database 130, and is a training sample collected by a data collection device 160.

In a case shown in FIG. 3, the user may manually input data and the manual operation may be performed in an interface provided by the I/O interface 112. In another case, the client device 140 may automatically send input data to the I/O interface 112. If the client device 140 needs to obtain authorization from the user to automatically send the input data, the user may set corresponding permission on the client device 140. The user may view, on the client device 140, a result output by the execution device 110. Specifically, the result may be presented in a form of displaying, a sound, an action, or the like. The client device 140 may alternatively be used as a data collection end, to collect, as new sample data, input data that is input to the I/O interface 112 and an output result that is output from the I/O interface 112 that are shown in the figure, and store the new sample data in the database 130. Certainly, the client device 140 may alternatively not perform collection. Instead, the I/O interface 112 directly stores, in the database 130 as new sample data, the input data that is input to the I/O interface 112 and the output result that is output from the I/O interface 112 that are shown in the figure.

It should be noted that FIG. 3 is merely a schematic diagram of an architecture of a system according to an embodiment of this application. A location relationship between a device, a component, a module, and the like shown in the figure constitutes no limitation. For example, in FIG. 3, the data storage system 150 is an external memory relative to the execution device 110. In another case, the data storage system 150 may alternatively be disposed in the execution device 110. As shown in FIG. 3, a neural network may be obtained through training by the training device 120.

An embodiment of this application further provides a chip. The chip includes a neural network processing unit NPU. The chip may be disposed in the execution device 110 shown in FIG. 3, to complete computing work of the computation module 111. The chip may alternatively be disposed in the training device 120 shown in FIG. 3, to complete training work of the training device 120 and output the target model/rule.

The neural network processing unit NPU serves as a coprocessor, and may be disposed on a host central processing unit (central processing unit, CPU) (host CPU). The host CPU assigns a task. A core part of the NPU is an operation circuit. A controller controls the operation circuit to extract data in a memory (a weight memory or an input memory) and perform an operation.

In some implementations, the operation circuit includes a plurality of process engines (process engine, PE) inside. In some implementations, the operation circuit is a two-dimensional systolic array. The operation circuit may alternatively be a one-dimensional systolic array or another electronic circuit capable of performing mathematical operations such as multiplication and addition. In some implementations, the operation circuit is a general-purpose matrix processor.

For example, it is assumed that there is an input matrix A, a weight matrix B, and an output matrix C. The operation circuit fetches, from a weight memory, data corresponding to the matrix B, and caches the data on each PE in the operation circuit. The operation circuit fetches data of the matrix A from an input memory to perform a matrix operation on the matrix B, and stores an obtained partial result or an obtained final result of the matrix in an accumulator (accumulator).

A vector computation unit may perform further processing such as vector multiplication, vector addition, an exponential operation, a logarithmic operation, or value comparison on an output of the operation circuit. For example, the vector computation unit may be configured to perform network computation, such as pooling (pooling), batch normalization (batch normalization), or local response normalization (local response normalization) at a non-convolutional/non-FC layer in a neural network.

In some implementations, the vector computation unit can store a processed output vector in a unified cache. For example, the vector computation unit may apply a nonlinear function to the output, for example, a vector of an accumulated value, of the operation circuit to generate an activation value. In some implementations, the vector computation unit generates a normalized value, a combined value, or both a normalized value and a combined value. In some implementations, the processed output vector can be used as an activated input to the operation circuit, for example, the processed output vector can be used at a subsequent layer of the neural network.

A unified memory is configured to store input data and output data.

For weight data, a direct memory access controller (direct memory access controller, DMAC) directly transfers input data from an external memory to the input memory and/or the unified memory, stores, in the weight memory, weight data in the external memory, and stores, in the external memory, data in the unified memory.

A bus interface unit (bus interface unit, BIU) is configured to implement interaction between the host CPU, the DMAC, and an instruction fetch buffer by using a bus.

The instruction fetch buffer (instruction fetch buffer) connected to the controller is configured to store instructions used by the controller.

The controller is configured to invoke the instructions cached in the instruction fetch buffer, to control a working process of an operation accelerator.

Usually, the unified memory, the input memory, the weight memory, and the instruction fetch buffer each are an on-chip (On-Chip) memory. The external memory is a memory outside the NPU. The external memory may be a double data rate synchronous dynamic random access memory (double data rate synchronous dynamic random access memory, DDR SDRAM), a high bandwidth memory (high bandwidth memory, HBM), or another readable and writable memory.

Embodiments of this application relate to massive application of a neural network. Therefore, for ease of understanding, the following first describes terms and concepts related to the neural network in embodiments of this application.

### (1) Neural network

The neural network may include a neuron. The neuron may be an operation unit that uses xs and an intercept of 1 as an input. An output of the operation unit may be as follows: ${h}_{W , b} \left(x\right) = f \left({W}^{T}x\right) = f \left({\sum }_{s = 1}^{n} {W}_{s} {x}_{s} + b\right)$ (1)

s = 1, 2, ..., or n. n is a natural number greater than 1. Ws is a weight of xs. b is a bias of the neuron. f is an activation function (activation functions) of the neuron, and is used to introduce a nonlinear feature into the neural network, to convert an input signal in the neuron into an output signal. The output signal of the activation function may be used as an input of a next convolutional layer. The activation function may be a sigmoid function. The neural network is a network formed by connecting a plurality of single neurons together. To be specific, an output of a neuron may be an input of another neuron. An input of each neuron may be connected to a local receptive field of a previous layer to extract a feature of the local receptive field. The local receptive field may be a region including several neurons.

Work at each layer of the neural network may be described by using a mathematical expression *y* = *a*(*Wx + b*). From a physical layer, work at each layer of the neural network may be understood as completing transformation from input space to output space (namely, from row space to column space of a matrix) by performing five operations on the input space (a set of input vectors). The five operations include: 1. dimension increasing/dimension reduction; 2. scaling up/scaling down; 3. rotation; 4. translation; and 5. "bending". The operation 1, 2, and 3 are performed by *Wx,* the operation 4 is performed by *+b ,* and the operation 5 is performed by *a*(). The word "space" is used herein for expression because a classified object is not a single thing, but a type of things. Space is a collection of all individuals of such type of things. *W* is a weight vector, and each value in the vector indicates a weight value of one neuron in the neural network at this layer. The vector *W* determines the space transformation from the input space to the output space described above, that is, a weight *W* of each layer controls a method for space transformation. An objective of training the neural network is to finally obtain a weight matrix (a weight matrix formed by vectors *W* at a plurality of layers) at all layers of a trained neural network. Therefore, a training process of the neural network is essentially a manner of learning control of space transformation, and more specifically, learning a weight matrix.

Because it is expected that an output of the neural network is as close as possible to a value that is actually expected to be predicted, a current predicted value of the network may be compared with a target value that is actually expected, and then a weight vector at each layer of the neural network is updated based on a difference between the current predicted value and the target value (certainly, there is usually an initialization process before a first update, that is, a parameter is preconfigured for each layer of the neural network). For example, if the predicted value of the network is large, the weight vector is adjusted to lower the predicted value, and adjustment is continuously performed until the neural network can predict the target value that is actually expected. Therefore, "how to obtain a difference between the predicted value and the target value through comparison" needs to be predefined. This is a loss function (loss function) or an objective function (objective function). The loss function and the objective function are important equations that measure the difference between the predicted value and the target value. The loss function is used as an example. A higher output value (loss) of the loss function indicates a larger difference. Therefore, training of the neural network is a process of minimizing the loss.

### (2) Back propagation algorithm

In a training process, a neural network may correct a value of a parameter of an initial neural network model by using an error back propagation (back propagation, BP) algorithm, so that a reconstruction error loss of the neural network model becomes increasingly smaller. Specifically, an input signal is forward transferred until the error loss is generated in an output, and the parameter of the initial neural network model is updated through back propagation of information about the error loss, to converge the error loss. The back propagation algorithm is an error-loss-centered back propagation motion intended to obtain a parameter, such as a weight matrix, of an optimal neural network model.

The following describes the method provided in this application from a neural network training side and a neural network application side.

A model training method provided in embodiments of this application relates to image processing. The model training method may be specifically applied to data processing methods such as data training, machine learning, and deep learning. Symbolized and formalized intelligent information modeling, extraction, preprocessing, training, and the like are performed on training data (for example, a reference image and a to-be-classified image in this application), to finally obtain a trained neural network (for example, an image classification model in this application). In addition, the foregoing trained neural network may be used in an image processing method provided in embodiments of this application. Input data (for example, the reference image and the to-be-classified image in this application) is input to the trained neural network, to obtain output data (for example, a first classification result of the reference image and a third classification result of the to-be-classified image in this application). It should be noted that the model training method and the image processing method that are provided in embodiments of this application are inventions generated based on a same idea, or may be understood as two parts of a system or two phases, such as a model training phase and a model application phase, of an overall procedure.

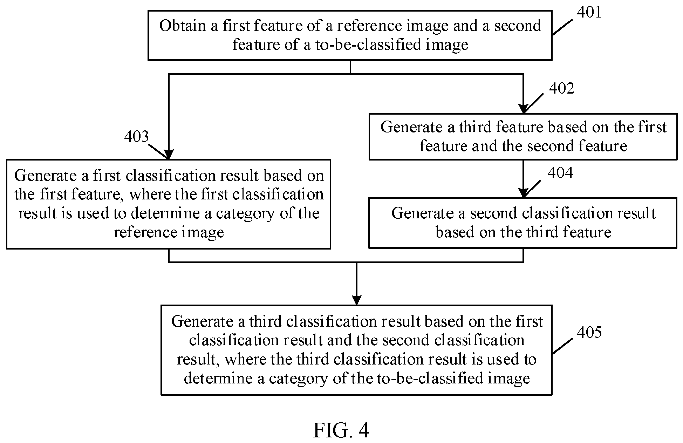

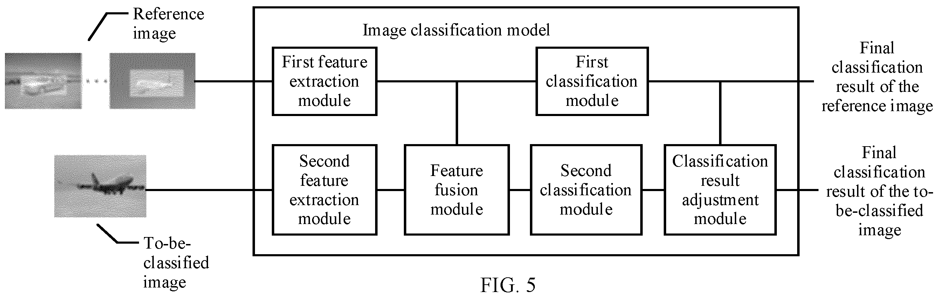

FIG. 4 is a schematic flowchart of an image classification method according to an embodiment of this application. In the method, a reference image and a to-be-classified image may be processed by using an image classification model, to determine a category of the to-be-classified image, that is, a category to which an object presented in the to-be-classified image belongs. A structure of the image classification model is shown in FIG. 5 (FIG. 5 is a schematic diagram of a structure of an image classification model according to an embodiment of this application). The image classification model includes two branches. One branch includes a first feature extraction module and a first classification module. The other branch includes a second feature extraction module, a feature fusion module, a second classification module, and a classification result adjustment module. The following specifically describes the image classification method provided in this application with reference to FIG. 4 and FIG. 5. The method includes the following steps.

401: Obtain a first feature of the reference image and a second feature of the to-be-classified image.

When the category of the to-be-classified image needs to be determined, the reference image related to the to-be-classified image may be first obtained. It should be noted that a quantity of reference images is usually greater than a quantity of to-be-classified images. Categories of different reference images are usually different (in other words, different reference images present objects of different categories). A quantity of reference images belonging to a basic category is usually relatively large, a quantity of reference images belonging to a new category is usually relatively small. A category to which the to-be-classified image belongs is usually one of categories to which a plurality of reference images belong. For example, as shown in FIG. 5, the plurality of reference images may be an image presenting a vehicle, an image presenting an airplane, and the like. The to-be-classified image may be an image presenting an airplane. A vehicle category is one of basic categories, and an airplane category is one of new categories. The basic category may further include a bicycle category, a motorcycle category, and the like that are not shown in FIG. 5. The new category may further include a high-speed railway category and the like that are not shown in FIG. 5.

Then, the reference image is input to the first feature extraction module of the image classification model, so that feature extraction processing may be performed on the reference image by using the first feature extraction module, to obtain the first feature of the reference image. Similarly, the to-be-classified image is input to the second feature extraction module of the image classification model, so that feature extraction processing is performed on the to-be-classified image by using the second feature extraction module, to obtain the second feature of the to-be-classified image.

Specifically, a plurality of reference images may be input into a first feature extraction module *Eₛ*. For any reference image *Sᵢ* (namely, an i^{th} reference image), the first feature extraction module *Eₛ* may perform feature extraction processing on a reference image *Sᵢ* to obtain a first feature *Eₛ*(*Sᵢ*) of the reference image *Sᵢ*. Similarly, a to-be-classified image *Q* may be input to a second feature extraction module *E_{q}*. The second feature extraction module *E*_{q} may divide the to-be-classified image into a plurality of image subblocks. The second feature extraction module *E_{q}* may perform feature extraction processing on any image subblock *Qⱼ* (namely, a j^{th} image block) to obtain a second feature *E_{q}*(*Qⱼ*) of the image subblock *Qⱼ* of the to-be-classified image *Q.*

402: Generate a third feature based on the first feature and the second feature.

After obtaining the first feature of the reference image, the first feature extraction module may send the first feature of the reference image to the feature fusion module. Similarly, after obtaining the second feature of the to-be-classified image, the second feature extraction module may input the second feature of the to-be-classified image to the feature fusion module. In this way, the feature fusion module may perform feature fusion processing on the first feature and the second feature to obtain the third feature of the to-be-classified image. The feature fusion processing may include at least one of addition processing, multiplication processing, subtraction processing, concatenation processing, and concatenation convolution processing.

Specifically, the first feature extraction module *Eₛ* may input first features of all reference images to a feature fusion module *T*, and the second feature extraction module *E_{q}* may input second features of all image subblocks of the to-be-classified image to the feature fusion module *T.* Therefore, the feature fusion module *T* may perform feature fusion on the first features of all the reference images and the second features of all the image subblocks of the to-be-classified image to obtain a plurality of third features. For example, the feature fusion module *T* may perform feature fusion on the first feature *Eₛ*(*Sᵢ*) of the reference image *Sᵢ* and the second feature *E_{q}*(*Qⱼ*) of the image subblock *Qⱼ* to obtain a third feature *T*(*Sᵢ, Qⱼ*)*.* In this case, the third feature T(*Sᵢ, Qⱼ*) may be considered as a third feature obtained for the image subblock *Qⱼ* of the to-be-classified image *Q* under an action of the reference image *Sᵢ*. In addition, a third feature obtained for the image subblock *Qⱼ* of the to-be-classified image *Q* under an action of a remaining reference image may be further obtained. Therefore, a third feature obtained for the image subblock *Qⱼ* of the to-be-classified image *Q* under an action of each reference image may be considered as a third feature of the image subblock *Qⱼ* of the to-be-classified image *Q.* In this way, third features of each image subblock of the to-be-classified image *Q* (that is, third features of the to-be-classified image *Q*) may be obtained.

403: Generate a first classification result based on the first feature, where the first classification result is used to determine a category of the reference image.

After obtaining the first feature of the reference image, the first feature extraction module may further input the first feature of the reference image to the first classification module. In this case, the first classification module may calculate, based on the first feature of the reference image, a probability that the reference image belongs to each category, to obtain the first classification result (that is, a final classification result of the reference image). Because the first classification result includes the probability that the reference image belongs to each category (that is, a probability that a target object presented in the reference image belongs to each category), the category of the reference image may be determined based on the first classification result. In addition, the first classification result may further include location information (for example, two-dimensional coordinates) of the target object in the reference image.

For example, it is assumed that the reference image is an image presenting a bicycle. After obtaining a first feature of the image, the first classification module may calculate, based on the first feature of the image, a probability that the image belongs to each category such as a vehicle, an airplane, a train, and a bicycle, to obtain a first classification result of the image. The classification result includes a probability that the image belongs to a vehicle category, a probability that the image belongs to an airplane category, a probability that the image belongs to a train category, a probability that the image belongs to a bicycle category, and the like. Therefore, based on these probabilities, a category to which the image belongs may be determined (generally, in the classification result, the probability that the image belongs to a bicycle is the largest, and therefore, it may be determined that the image belongs to a bicycle category). In addition, the classification result may further include two-dimensional coordinates of the bicycle in the image.

Specifically, the first feature extraction module *Eₛ* may input first features of all the reference images to a first classification module *Pₛ.* The first classification module *Pₛ* may calculate a first feature Eₛ(*Sᵢ*) of any reference image *Sᵢ* to obtain a first classification result ${b}_{i}^{s} , {c}_{i}^{s}$ of the reference image *Sᵢ*. ${b}_{i}^{s}$ is coordinates of a target object in the reference image *Sᵢ* in the reference image *Sᵢ,* and ${c}_{i}^{s}$ is a probability that the reference image *Sᵢ* belongs to each category (in other words, category probability distribution of the reference image *Sᵢ*). In this case, after it is determined, from ${c}_{i}^{s}$, that a probability that the reference image *Sᵢ* belongs to a category is the largest, it may be determined that the reference image *Sᵢ* belongs to the category.

404: Generate a second classification result based on the third feature.

After obtaining the third feature of the to-be-classified image, the feature fusion module may send the third feature to the second classification module. In this case, the second classification module may calculate, based on the third feature of the to-be-classified image, a probability that the to-be-classified image belongs to each category, to obtain the second classification result. Because the second classification result includes the probability that the to-be-classified image belongs to each category (that is, a probability that a target object presented in the to-be-classified image belongs to each category), the second classification result may be used to determine the category of the to-be-classified image (but the second classification result is not used to determine the category of the to-be-classified image in this embodiment of this application, and details are not described herein). In addition, the second classification result may further include location information (for example, two-dimensional coordinates) of the target object in the to-be-classified image.

For example, it is assumed that the to-be-classified image is an image presenting an airplane. After obtaining a third feature of the image, the second classification module may calculate, based on the third feature of the image, a probability that the image belongs to each category such as a vehicle, an airplane, a train, and a bicycle, to obtain a second classification result of the image. The classification result includes a probability that the image belongs to a vehicle category, a probability that the image belongs to an airplane category, a probability that the image belongs to a train category, a probability that the image belongs to a bicycle category, and the like. Therefore, the classification result may be used to determine a category to which the image belongs (but this operation is not performed in this embodiment of this application, and details are not described herein). In addition, the classification result may further include two-dimensional coordinates of the airplane in the image.

Specifically, the feature fusion module *T* may send third features of all the image subblocks to a second classification module *P_{q}*. The second classifying module *P_{q}* may calculate the third feature *T*(*Sᵢ, Qⱼ*) obtained for any image subblock *Qⱼ* under the action of the reference image *Sᵢ*, to obtain a second classification result ${b}_{ij}^{q} , { c}_{ij}^{q}$ of the image subblock *Qⱼ* under the action of the reference image *Sᵢ*. ${b}_{ij}^{q}$ is coordinates of the image subblock *Qⱼ* in the to-be-classified image *Q*, and ${c}_{ij}^{q}$ is a probability that the image subblock *Qⱼ* belongs to each category. In this case, a second classification result (that is, a second classification result of the image subblock *Qⱼ*) of the image subblock *Qⱼ* under the action of each reference image may be obtained. Similarly, a second classification result (that is, a second classification result of a remaining image block) of the remaining image block under the action of each reference image may also be obtained. After second classification results of all the image blocks are obtained, it is equivalent to obtaining a second classification result of the to-be-classified image *Q.*

However, in a model training process in a related technology, because there are a relatively large quantity of images of the basic category (for example, a vehicle or a bicycle) and a relatively small quantity of images of the new category (for example, an airplane) in a reference image used for training, a model obtained by training based on these reference images is prone to fitting the new category to the basic category in an image classification process. In other words, when classifying a to-be-classified image belonging to the new category, the model is prone to determining the to-be-classified image as an image belonging to the basic category by mistake. Therefore, it is not accurate enough to directly use the second classification result of the to-be-classified image to determine the category of the to-be-classified image. Therefore, the second classification result of the to-be-classified image needs to be adjusted.

405: Generate a third classification result based on the first classification result and the second classification result, where the third classification result is used to determine the category of the to-be-classified image.

After obtaining the first classification result of the reference image, the first classification module may send the first classification result of the reference image to the classification result adjustment module. Similarly, after obtaining the second classification result of the to-be-classified image, the second classification module may send the second classification result of the to-be-classified image to the classification result adjustment module. In this case, the classification result adjustment module may adjust the second classification result of the to-be-classified image by using the first classification result of the reference image, to obtain the third classification result of the to-be-classified image (that is, a final classification result of the to-be-classified image). Then, the category of the to-be-classified image may be determined based on the third classification result of the to-be-classified image. The classification result adjustment module may adjust the second classification result in multiple manners, which are separately described in the following.

In a possible implementation, the classification result adjustment module performs addition processing on the first classification result of the reference image and the second classification result of the to-be-classified image, to obtain the third classification result of the to-be-classified image.

Specifically, the second classification result ${b}_{ij}^{q} , { c}_{ij}^{q}$ of the image subblock *Qⱼ* under the action of the reference image *Sᵢ* may be added to the first classification result of the reference image *Sᵢ*, to obtain a third classification result ${\hat{b}}_{ij}^{q} , {\hat{c}}_{ij}^{q}$ of the image subblock *Qⱼ* under the action of the reference image *Sᵢ*: $\begin{matrix}{\hat{b}}_{ij}^{q} = {b}_{ij}^{q} + {b}_{i}^{s} \\ {\hat{c}}_{ij}^{q} = {c}_{ij}^{q} + {c}_{i}^{s}\end{matrix}$ (2)

According to the foregoing formula, third classification results of the image subblock *Qⱼ* under actions of all the reference images may be obtained, and a category of the image subblock *Qⱼ* may be determined based on these classification results. By analogy, a third classification result of each image subblock under the action of each reference image may be obtained (equivalent to obtaining third classification results of all the image subblocks, that is, a third classification result of the to-be-classified image *Q*)*.* In this way, a category of each image subblock in the to-be-classified image *Q* may be determined. Because a target object presented in the to-be-classified image *Q* is distributed on the image subblocks, when categories of most of the image subblocks are a same category, the category of these image subblocks is the category of the to-be-classified image *Q* (that is, a category of the target object presented in the to-be-classified image *Q*)*.* Coordinates of these image subblocks in the to-be-classified image *Q* are coordinates of the target object in the to-be-classified image *Q.*

In another possible implementation, the classification result adjustment module may first perform addition processing on the first classification result of the reference image and the second classification result of the to-be-classified image, to obtain a fourth classification result of the to-be-classified image. Then, the classification result adjustment module performs addition processing on the first classification result of the reference image and a model parameter of the image classification model, to obtain a fifth classification result of the reference image. Then, the classification result adjustment module performs multiplication processing on the fifth classification result of the reference image and a preset weight parameter, to obtain a sixth classification result of the reference image. Finally, the classification result adjustment module performs subtraction processing on the fourth classification result of the to-be-classified image and the sixth classification result of the reference image, to obtain the third classification result of the to-be-classified image.

Specifically, the second classification result ${b}_{ij}^{q} , { c}_{ij}^{q}$ of the image subblock *Qⱼ* under the action of the reference image *Sᵢ* may be added to the first classification result ${b}_{i}^{s} , {c}_{i}^{s}$ of the reference image *Sᵢ*, to obtain a fourth classification result ${\hat{b}}_{ij}^{q} , {\hat{c}}_{ij}^{q}$ of the image subblock *Qⱼ* under the action of the reference image *Sᵢ*. It should be noted that, when the category of the reference image *Sᵢ* is the same as the category of the to-be-classified image *Q*, the first classification result ${b}_{i}^{s} , {c}_{i}^{s}$ of the reference image *Sᵢ* has a positive adjustment effect on the second classification result ${b}_{ij}^{q} , { c}_{ij}^{q}$ of the image subblock *Qⱼ* under the action of the reference image *Sᵢ*. When the category of the reference image *Sᵢ* is different from the category of the to-be-classified image *Q,* the first classification result ${b}_{i}^{s} , {c}_{i}^{s}$ of the reference image *Sᵢ* has a negative adjustment effect on the second classification result ${b}_{ij}^{q} , { c}_{ij}^{q}$ of the image subblock *Qⱼ* under the action of the reference image *Sᵢ*. It can be learned that, to make the final classification result accurate enough, impact brought by the two cases needs to be balanced.

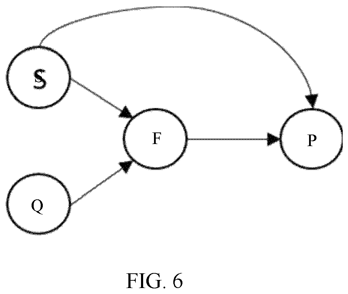

The following describes the foregoing balancing process with reference to FIG. 6. FIG. 6 is a schematic diagram of an effect diagram according to an embodiment of this application. As shown in FIG. 6, the image classification model is converted into an effect diagram, where S indicates a feature of the reference image, Q indicates a feature of the to-be-classified image, F indicates a fusion feature of the reference image and the to-be-classified image, and P is the final classification result of the to-be-classified image. S→P indicates that S is a factor of P, and P is a result of S.

It is assumed that s, p, and f are valid values (obtained by calculating the image) of S, Q, and F respectively, and s*, p*, and f* are invalid values (to be specific, S, Q, and F are all set to 0) of S, Q, and F respectively. A difference generated in the final classification result when each variable is a valid value and an invalid value may be calculated, to analyze an effect of each variable on the final classification result.

A total effect (total effect, TE) of S on P may be denoted as: $TE = {P}_{s , q , f} - {P}_{s ∗ , q ∗ , f ∗}$ (3)

In the foregoing formula, P*_{s,q,f}* is a final classification result obtained when S, Q, and F are all valid values. *P_{s*,q*,f*}* is a final classification result obtained when S, Q, and F are all invalid values.

A natural direct effect (natural direct effect, NDE) of S on P may be denoted as: $NDE = {P}_{s , q ∗ , f ∗} - {P}_{s ∗ , q ∗ , f ∗}$ (4)

In the foregoing formula, P*_{s,g*f*}* is a final classification result obtained when S is a valid value, and Q and F are both invalid values.

Then, a total indirect effect (total indirect effect, TIE) of S on P is: $TIE = TE - NDE = {P}_{s , q , f} - {P}_{s , q ∗ , f ∗}$ (5)

Because the TE of S on P is equal to a sum of the TIE of S on P and the NDE of S on P, based on a relationship (that is, the formula (5)) between the TE and P*_{s,q,f}*, the following may be obtained: $NDE + TIE + {P}_{s ∗ , q ∗ , f ∗} = {P}_{s , q , f}$ (6)

To reduce impact, on the final classification result, of the NDE of S on P, the NDE may be appropriately reduced to obtain a new final classification result: $α NDE + TIE + {P}_{s ∗ , q ∗ , f ∗} = {P}_{s , q , f}^{"}$ (7)

In the formula, *α* is generally greater than 0 and less than 1, and the specific value may be set based on actual requirements. ${P}_{s , q , f}^{"}$ is the new final classification result. In this way, the formula (4) and the formula (5) may be substituted into the formula (7) to obtain: ${P}_{s , q , f}^{"} = {P}_{s , q , f} - \left(1-α\right) \left({P}_{s , q ∗ , f ∗}-{P}_{s ∗ , q ∗ , f ∗}\right)$ (8)

After the formula (8) is obtained, the fourth classification result ${\hat{b}}_{ij}^{q} , {\hat{c}}_{ij}^{q}$ of the image subblock *Qⱼ* under the action of the reference image *Sᵢ* may be used as an original final classification result (that is, P*_{s,q,f}* substituted into the formula (8)). Correspondingly, P*_{s,g*,f*}* is ${b}_{i}^{s} + A$ and ${c}_{i}^{s} + A$. A is a model parameter (which may be considered as a constant) of the feature fusion module and the classification result adjustment module in a trained image classification model. *P_{s*,q*,f*}* is B, and B is the model parameter (also a constant) of the trained image classification model. Therefore, a corresponding new final classification result (that is, the third classification result of the image subblock *Qⱼ* under the action of the reference image *Sᵢ*) may be obtained: $\begin{matrix}{{b}^{˜}}_{ij}^{q} = {\hat{b}}_{ij}^{q} - \left(1-α\right) \left({b}_{i}^{s}+A-B\right) \\ {{c}^{˜}}_{ij}^{q} = {\hat{c}}_{ij}^{q} - \left(1-α\right) \left({c}_{i}^{s}+A-B\right)\end{matrix}$ (9)

The third classification result of the image subblock *Qⱼ* under the action of the reference image *Sᵢ* may be obtained according to the formula (9). By analogy, third classification results of the image subblock *Qⱼ* under actions of all the reference images may be obtained (equivalent to obtaining a third classification result of the image subblock *Qⱼ*), and the category of the image subblock *Qⱼ* may be determined based on these classification results. Similarly, third classification results of each image subblock under actions of all the reference images may also be obtained (equivalent to obtaining a third classification result of each image subblock, that is, a third classification result of the to-be-classified image *Q*)*.* In this way, the category of each image subblock in the to-be-classified image *Q* may be determined. Because a target object presented in the to-be-classified image *Q* is distributed on the image subblocks, when categories of most of the image subblocks are a same category, the category of these image subblocks is the category of the to-be-classified image *Q* (that is, a category of the target object presented in the to-be-classified image *Q*). Coordinates of these image subblocks in the to-be-classified image *Q* are coordinates of the target object in the to-be-classified image *Q.*

It should be noted that in the formula (9), (1 - *α*) is equivalent to the foregoing preset weight parameter, A - B is equivalent to the foregoing model parameter of the image classification model, $\left({b}_{i}^{s}+A-B\right)$ and $\left({c}_{i}^{s}+A-B\right)$ are equivalent to the foregoing fifth classification result of the reference image, and $\left(1-α\right) \left({b}_{i}^{s}+A-B\right)$ and $\left(1-α\right) \left({c}_{i}^{s}+A-B\right)$ are equivalent to the foregoing sixth classification result of the reference image.

In addition, the image classification model provided in embodiments of this application may be compared with image classification models in related technologies. Specifically, a same test sample (including reference images and a to-be-classified image) may be input to the image classification model provided in embodiments of this application and the image classification models in the related technologies for testing. Obtained results are shown in Table 1 to Table 4. There are 10 reference images belonging to the new category in a first test sample, and 30 reference images belonging to the new category in a second test sample. There are far more than 30 reference images belonging to the basic category in the first test sample and the second test sample.

Table 1 and Table 3 show average precision rates under six conditions. The six conditions are: an intersection over union between 0.5 and 0.95 (a step is 0.05), an intersection over union equal to 0.5, an intersection over union equal to 0.75, detecting a large-scale object (including more pixels), detecting a meso-scale object (including moderate pixels), and detecting a small-scale object (including fewer pixels). The intersection over union indicates a ratio of a predicted location (that is, a predicted detection box including a target object) of the target object in the to-be-classified image to a real location (that is, a real detection box including the target object). Table 2 and Table 4 show average recall rates under six conditions. The six conditions are: setting one detection box, setting 10 detection boxes, setting 100 detection boxes, detecting a large-scale object, detecting a meso-scale object, and detecting a small-scale object. Table 1 to Table 4 are as follows:

**Table 1**

| First test sample | Model | Average accuracy | | | | | |
|---|---|---|---|---|---|---|---|
| | | 0.5:0.95 | 0.5 | 0.75 | Large-scale object | Meso-scale object | Small-scale object |
| | Related technology 1 | 3.2 | 8.1 | 2.1 | 0.9 | 2.0 | 6.5 |
| | Related technology 2 | 5.6 | 12.3 | 4.6 | 0.9 | 3.5 | 10.5 |
| | Related technology 3 | 8.7 | 19.1 | 6.6 | 2.3 | 7.7 | 14.0 |
| | Related technology 4 | 11.1 | 20.4 | 10.6 | - | - | - |
| | Related technology 5 | 5.1 | - | - | - | - | - |
| | Related technology 6 | 9.8 | 17.9 | 9.7 | 3.3 | 9.2 | 16.1 |
| | Related technology 7 | 7.1 | 14.6 | 6.1 | 1.0 | 4.1 | 12.2 |
| | Related technology 8 | 9.1 | 17.3 | 8.5 | - | - | - |
| | Related technology 9 | 9.1 | 17.1 | 8.8 | - | - | - |
| | Related technology 10 | 12.5 | 27.3 | 9.8 | 2.5 | 13.8 | 19.9 |
| | This application | 16.7 | 33.4 | 15.0 | 5.7 | 17.7 | 27.0 |

**Table 2**

| First test sample | Model | Average recall rate | | | | | |
|---|---|---|---|---|---|---|---|
| | | 1 | 10 | 100 | Large-scale object | Meso-scale object | Small-scale object |
| | Related technology 1 | 7.8 | 10.4 | 10.4 | 1.1 | 5.6 | 19.6 |
| | Related technology 2 | 10.1 | 14.3 | 14.4 | 1.5 | 8.4 | 28.2 |
| | Related technology 3 | 12.6 | 17.8 | 17.9 | 7.8 | 15.6 | 27.2 |
| | Related technology 4 | - | - | - | - | - | - |
| | Related technology 5 | 9.5 | - | - | - | - | - |
| | Related technology 6 | 15.7 | 21.2 | 21.2 | 4.6 | 19.6 | 34.3 |
| | Related technology 7 | 11.9 | 15.1 | 15.5 | 1.7 | 9.7 | 30.1 |
| | Related technology 8 | - | - | - | - | - | - |
| | Related technology 9 | - | - | - | - | - | - |
| | Related technology 10 | 20.0 | 25.5 | 25.7 | 7.5 | 27.6 | 38.9 |
| | This application | 23.9 | 30.5 | 30.7 | 12.4 | 32.7 | 44.4 |

**Table 3**

| Second test sample | Model | Average accuracy | | | | | |
|---|---|---|---|---|---|---|---|
| | | 0.5:0.95 | 0.5 | 0.75 | Large-scale object | Meso-scale object | Small-scale object |
| | Related technology 1 | 6.7 | 15.8 | 5.1 | 0.4 | 2.9 | 12.3 |
| | Related technology 2 | 9.1 | 19.0 | 7.6 | 0.8 | 4.9 | 16.8 |
| | Related technology 3 | 12.4 | 25.3 | 10.8 | 2.8 | 11.6 | 19.0 |
| | Related technology 4 | 14.1 | 25.4 | 14.2 | 4.0 | 12.9 | 23.0 |
| | Related technology 5 | 11.3 | 21.7 | 8.1 | 1.1 | 6.2 | 17.3 |
| | Related technology 6 | 12.0 | 22.2 | 11.8 | - | - | - |
| | Related technology 7 | 12.1 | 22.0 | 12.0 | - | - | - |
| | Related technology 8 | 14.7 | 30.6 | 12.2 | 3.2 | 15.2 | 23.8 |
| | This application | 18.4 | 35.8 | 17.4 | 5.7 | 19.3 | 29.4 |

**Table 4**

| Second test sample | Model | Average recall rate | | | | | |
|---|---|---|---|---|---|---|---|
| | | 1 | 10 | 100 | Large-scale object | Meso-scale object | Small-scale object |
| | Related technology 1 | 10.9 | 14.3 | 14.3 | 0.9 | 7.1 | 27.0 |
| | Related technology 2 | 13.2 | 17.7 | 17.8 | 1.5 | 10.4 | 33.5 |
| | Related technology 3 | 15.0 | 21.4 | 21.7 | 8.6 | 20.0 | 32.1 |
| | Related technology 6 | 17.7 | 24.2 | 24.3 | 5.5 | 21.0 | 39.3 |
| | Related technology 7 | 14.5 | 18.9 | 19.2 | 1.8 | 11.1 | 34.4 |
| | Related technology 8 | - | - | - | - | - | - |
| | Related technology 9 | - | - | - | - | - | - |
| | Related technology 10 | 22.0 | 28.2 | 28.4 | 8.3 | 30.3 | 42.1 |
| | This application | 25.3 | 32.0 | 32.3 | 12.9 | 34.5 | 45.1 |

It can be learned that performance of the model provided in embodiments of this application is obviously better than performance of the models in the related technologies.

In embodiments of this application, after a reference image and a to-be-classified image are input to an image classification model, the image classification model may perform the following steps: obtaining a first feature of the reference image and a second feature of the to-be-classified image; then generating a third feature based on the first feature and the second feature; then generating a first classification result based on the first feature, where the first classification result may be used to determine a category of the reference image, and generating a second classification result based on the third feature; finally generating a third classification result based on the first classification result and the second classification result; and determining a category of the to-be-classified image based on the obtained third classification result. It can be learned that, in a process in which the image classification model generates the third classification result of the to-be-classified image, the first classification result of the reference image is integrated. This is equivalent to that the image classification model focuses on category information of the reference image. Regardless of whether the category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

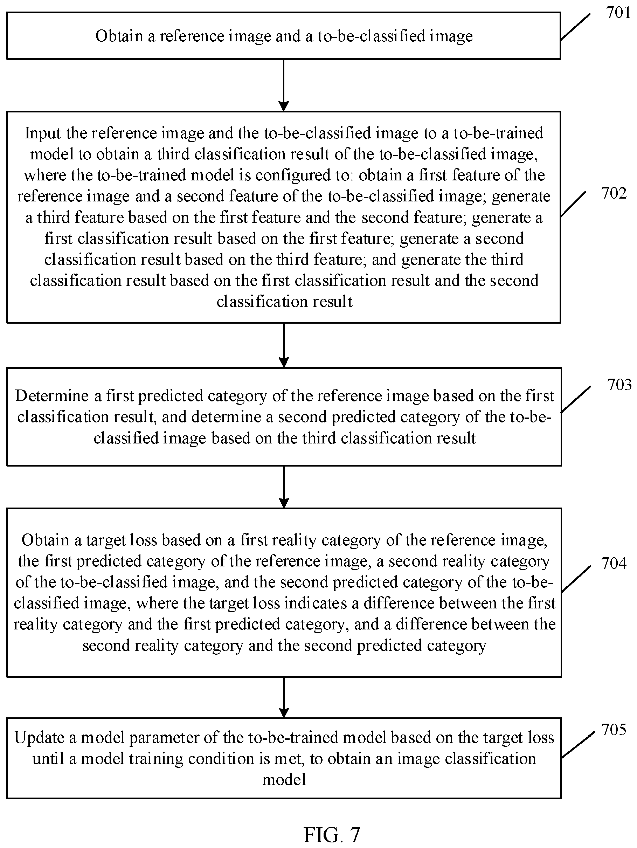

The foregoing describes in detail the image classification method provided in embodiments of this application. The following describes a model training method provided in embodiments of this application. FIG. 7 is a schematic flowchart of a model training method according to an embodiment of this application. As shown in FIG. 7, the method includes the following steps.

701: Obtain a reference image and a to-be-classified image.

When a to-be-trained model needs to be trained, a batch of training samples, to be specific, a reference image and a to-be-classified image used for training, may be obtained. The to-be-trained model includes two branches. One branch includes a first feature extraction module and a first classification module. The other branch includes a second feature extraction module, a feature fusion module, a second classification module, and a classification result adjustment module. It should be noted that a first reality category of the reference image and a second reality category of the to-be-classified image are known. For descriptions of the reference image and the to-be-classified image, refer to related descriptions of step 401 in the embodiment shown in FIG. 4. Details are not described herein again.

702: Input the reference image and the to-be-classified image to the to-be-trained model to obtain a third classification result of the to-be-classified image, where the to-be-trained model is configured to: obtain a first feature of the reference image and a second feature of the to-be-classified image; generate a third feature based on the first feature and the second feature; generate a first classification result based on the first feature; generate a second classification result based on the third feature; and generate the third classification result based on the first classification result and the second classification result.

After the reference image and the to-be-classified image are obtained, the reference image may be input to the first feature module, so that feature extraction processing is performed on the reference image by using the first feature extraction module, to obtain the first feature of the reference image. Similarly, the to-be-classified image is input to the second feature module, so that feature extraction processing is performed on the to-be-classified image by using the second feature extraction module, to obtain the second feature of the to-be-classified image.

After obtaining the first feature of the reference image, the first feature extraction module may send the first feature of the reference image to the feature fusion module. Similarly, after obtaining the second feature of the to-be-classified image, the second feature extraction module may input the second feature of the to-be-classified image to the feature fusion module. In this way, the feature fusion module may perform feature fusion processing on the first feature and the second feature to obtain the third feature of the to-be-classified image.

After obtaining the first feature of the reference image, the first feature extraction module may further input the first feature of the reference image to the first classification module. In this case, the first classification module may calculate, based on the first feature of the reference image, a probability that the reference image belongs to each category, to obtain the first classification result.

After obtaining the third feature of the to-be-classified image, the feature fusion module may send the third feature to the second classification module. In this case, the second classification module may calculate, based on the third feature of the to-be-classified image, a probability that the to-be-classified image belongs to each category, to obtain the second classification result.

After obtaining the first classification result of the reference image, the first classification module may send the first classification result of the reference image to the classification result adjustment module. Similarly, after obtaining the second classification result of the to-be-classified image, the second classification module may send the second classification result of the to-be-classified image to the classification result adjustment module. In this case, the classification result adjustment module may adjust the second classification result of the to-be-classified image by using the first classification result of the reference image, to obtain the third classification result of the to-be-classified image. Specifically, the classification result adjustment module may obtain the third classification result in multiple manners.

In a possible implementation, the classification result adjustment module performs addition processing on the first classification result of the reference image and the second classification result of the to-be-classified image, to obtain the third classification result of the to-be-classified image.

It should be understood that, in a model training process, there may be no need to balance positive impact and negative impact that are brought by the first classification result of the reference image to the second classification result of the to-be-classified image. However, in an actual application process of the model (that is, in the embodiment shown in FIG. 4), the positive impact and the negative impact may be balanced.

For a process in which the to-be-trained model obtains the first classification result of the reference image and the third classification result of the to-be-classified image, refer to related descriptions of step 401 to step 405 in the embodiment shown in FIG. 4. Details are not described herein again.

703: Determine a first predicted category of the reference image based on the first classification result, and determine a second predicted category of the to-be-classified image based on the third classification result.

After the first classification result of the reference image and the third classification result of the to-be-classified image are obtained by using the to-be-trained model, the first predicted category of the reference image may be determined based on the first classification result of the reference image, and the second predicted category of the to-be-classified image may be determined based on the third classification result of the to-be-classified image.

704: Obtain a target loss based on the first reality category of the reference image, the first predicted category of the reference image, the second reality category of the to-be-classified image, and the second predicted category of the to-be-classified image, where the target loss indicates a difference between the first reality category and the first predicted category, and a difference between the second reality category and the second predicted category.

After the first predicted category of the reference image and the second predicted category of the to-be-classified image are obtained, calculation may be performed based on the first reality category of the reference image, the first predicted category of the reference image, the second reality category of the to-be-classified image, and the second predicted category of the to-be-classified image, to obtain the target loss. Specifically, the target loss may be obtained in multiple manners.

In a possible implementation, the first predicted category and the first reality category of the reference image are calculated by using a first objective function, to obtain a first sub-loss, where the first sub-loss indicates the difference between the first reality category and the first predicted category. The second predicted category and the second reality category of the to-be-classified image are calculated by using a second objective function, to obtain a second sub-loss, where the second sub-loss indicates the difference between the second reality category and the second predicted category. After the first sub-loss and the second sub-loss are obtained, addition processing is performed on the first sub-loss and the second sub-loss to obtain the target loss.

705: Update a model parameter of the to-be-trained model based on the target loss until a model training condition is met, to obtain an image classification model.

After the target loss is obtained, the model parameter of the to-be-trained model may be updated based on the target loss. The to-be-trained model of which the parameter is updated is trained by using a next batch of training samples (that is, step 702 to step 705 are performed again), until the model training condition is met (for example, the target loss is converged), to obtain the image classification model.

The image classification model obtained through training in this embodiment of this application has a capability of classifying the to-be-classified image by using the reference image. In an image classification process, the image classification model may focus on category information of the reference image. Regardless of whether a category of the reference image is a new category or a basic category, the model can notice impact caused by the category of the reference image in a classification process of the to-be-classified image. Therefore, the model does not fit the new category to the basic category. In other words, if the to-be-classified image is an image belonging to the new category, the image classification model may accurately determine the category of the to-be-classified image as a category in the new category, and does not determine the category of the to-be-classified image as a category in the basic category by mistake, thereby improving accuracy of image classification.

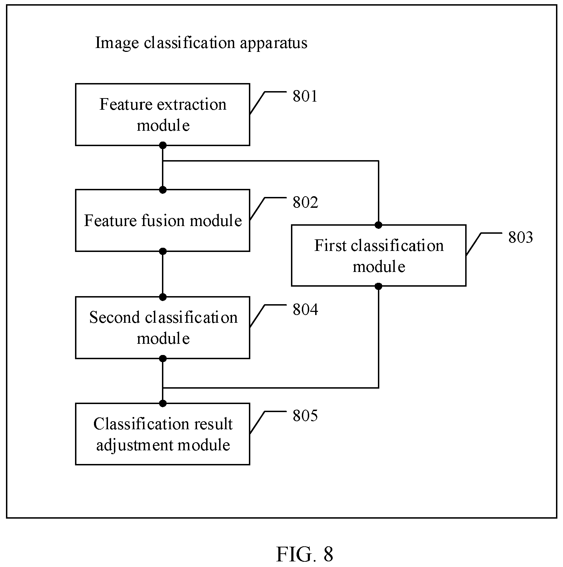

The foregoing describes in detail the model training method provided in embodiments of this application. The following separately describes an image classification apparatus and a model training apparatus provided in embodiments of this application. FIG. 8 is a schematic diagram of a structure of an image classification apparatus according to an embodiment of this application. As shown in FIG. 8, the apparatus includes:
a feature extraction module 801, configured to obtain a first feature of a reference image and a second feature of a to-be-classified image;
a feature fusion module 802, configured to generate a third feature based on the first feature and the second feature;
a first classification module 803, configured to generate a first classification result based on the first feature, where the first classification result is used to determine a category of the reference image;
a second classification module 804, configured to generate a second classification result based on the third feature; and
a classification result adjustment module 805, configured to generate a third classification result based on the first classification result and the second classification result, where the third classification result is used to determine a category of the to-be-classified image.

In a possible implementation, the classification result adjustment module 805 is configured to perform addition processing on the first classification result and the second classification result to obtain the third classification result.

In a possible implementation, the classification result adjustment module 805 is configured to: perform addition processing on the first classification result and the second classification result to obtain a fourth classification result; perform addition processing on the first classification result and a model parameter of the image classification model to obtain a fifth classification result; perform multiplication processing on the fifth classification result and a preset weight parameter to obtain a sixth classification result; and perform subtraction processing on the fourth classification result and the sixth classification result to obtain the third classification result.

In a possible implementation, the first classification module 803 is configured to calculate, based on the first feature, a probability that the reference image belongs to each category, to obtain the first classification result; and the second classification module 804 is configured to calculate, based on the third feature, a probability that the to-be-classified image belongs to each category, to obtain the second classification result.

In a possible implementation, the feature fusion module 802 is configured to perform feature fusion processing on the first feature and the second feature to obtain the third feature.

In a possible implementation, the feature fusion processing includes at least one of addition processing, multiplication processing, subtraction processing, concatenation processing, and concatenation convolution processing.

In a possible implementation, the feature extraction module 801 includes a first feature extraction module and a second feature extraction module. The first feature extraction module is configured to perform feature extraction processing on the reference image to obtain the first feature, and the second feature extraction module is configured to perform feature extraction processing on the to-be-classified image to obtain the second feature.

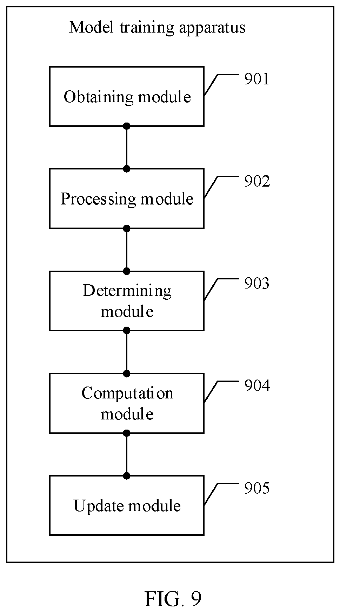

FIG. 9 is a schematic diagram of a structure of a model training apparatus according to an embodiment of this application. As shown in FIG. 9, the apparatus includes:
an obtaining module 901, configured to obtain a reference image and a to-be-classified image;
a processing module 902, configured to input the reference image and the to-be-classified image to a to-be-trained model to obtain a third classification result of the to-be-classified image, where the to-be-trained model is configured to: obtain a first feature of the reference image and a second feature of the to-be-classified image; generate a third feature based on the first feature and the second feature; generate a first classification result based on the first feature; generate a second classification result based on the third feature; and generate a third classification result based on the first classification result and the second classification result;
a determining module 903, configured to determine a first predicted category of the reference image based on the first classification result, and determine a second predicted category of the to-be-classified image based on the third classification result;
a computation module 904, configured to obtain a target loss based on a first reality category of the reference image, the first predicted category of the reference image, a second reality category of the to-be-classified image, and the second predicted category of the to-be-classified image, where the target loss indicates a difference between the first reality category and the first predicted category, and a difference between the second reality category and the second predicted category; and
an update module 905, configured to update a model parameter of the to-be-trained model based on the target loss until a model training condition is met, to obtain an image classification model.

In a possible implementation, the computation module 904 is configured to: obtain a first sub-loss based on the first reality category and the first predicted category of the reference image, where the first sub-loss indicates the difference between the first reality category and the first predicted category; obtain a second sub-loss based on the second reality category and the second predicted category of the to-be-classified image, where the second sub-loss indicates the difference between the second reality category and the second predicted category; and perform addition processing on the first sub-loss and the second sub-loss to obtain the target loss.

In a possible implementation, the to-be-trained model is configured to perform addition processing on the first classification result and the second classification result to obtain the third classification result.

In a possible implementation, the to-be-trained model is configured to: calculate, based on the first feature, a probability that the reference image belongs to each category, to obtain the first classification result; and calculate, based on the third feature, a probability that the to-be-classified image belongs to each category, to obtain the second classification result.

In a possible implementation, the to-be-trained model is configured to perform feature fusion processing on the first feature and the second feature to obtain the third feature.

In a possible implementation, the feature fusion processing includes at least one of addition processing, multiplication processing, subtraction processing, concatenation processing, and concatenation convolution processing.

In a possible implementation, the to-be-trained model is configured to: perform feature extraction processing on the reference image to obtain the first feature; and perform feature extraction processing on the to-be-classified image to obtain the second feature.

It should be noted that, content such as information exchange between the modules/units of the apparatus and the execution processes thereof is based on the same idea as the method embodiments of this application, and produces the same technical effects as that of the method embodiments of this application. For specific content, refer to the foregoing descriptions in the method embodiments of this application. Details are not described herein again.

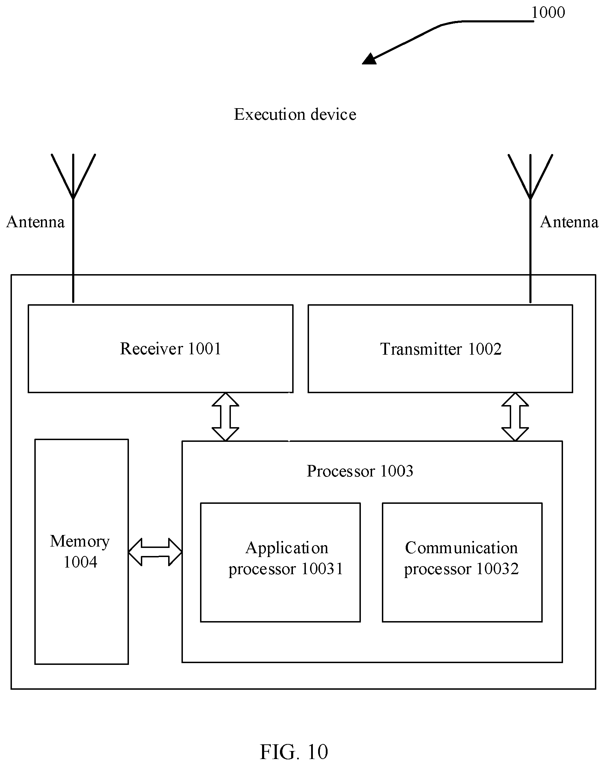

An embodiment of this application further relates to an execution device. FIG. 10 is a schematic diagram of a structure of an execution device according to an embodiment of this application. As shown in FIG. 10, an execution device 1000 may be specifically a mobile phone, a tablet computer, a notebook computer, an intelligent wearable device, a server, or the like. This is not limited herein. The image classification apparatus described in the embodiment corresponding to FIG. 8 may be deployed on the execution device 1000, and is configured to implement a function of the image classification in the embodiment corresponding to FIG. 4. Specifically, the execution device 1000 includes: a receiver 1001, a transmitter 1002, a processor 1003, and a memory 1004 (there may be one or more processors 1003 in the execution device 1000, and one processor is used as an example in FIG. 10). The processor 1003 may include an application processor 10031 and a communication processor 10032. In some embodiments of this application, the receiver 1001, the transmitter 1002, the processor 1003, and the memory 1004 may be connected through a bus or in another manner.

The memory 1004 may include a read-only memory and a random access memory, and provide instructions and data for the processor 1003. A part of the memory 1004 may further include a non-volatile random access memory (non-volatile random access memory, NVRAM). The memory 1004 stores a processor and operation instructions, an executable module or a data structure, a subnet thereof, or an extended set thereof. The operation instructions may include various operation instructions to implement various operations.

The processor 1003 controls an operation of the execution device. During specific application, the components of the execution device are coupled together through a bus system. In addition to a data bus, the bus system may further include a power bus, a control bus, a status signal bus, and the like. However, for clear description, various types of buses in the figure are marked as the bus system.

The method disclosed in the foregoing embodiments of this application may be applied to the processor 1003, or may be implemented by the processor 1003. The processor 1003 may be an integrated circuit chip, and has a signal processing capability. In an implementation process, steps in the foregoing methods may be implemented by using a hardware integrated logical circuit in the processor 1003, or by using instructions in a form of software. The processor 1003 may be a general-purpose processor, a digital signal processor (digital signal processor, DSP), a microprocessor, or a microcontroller. The processor 1003 may further include an application specific integrated circuit (application specific integrated circuit, ASIC), a field-programmable gate array (field-programmable gate array, FPGA) or another programmable logic device, a discrete gate, a transistor logic device, or a discrete hardware component. The processor 1003 may implement or perform the methods, the steps, and the logical block diagrams that are disclosed in embodiments of this application. The general-purpose processor may be a microprocessor, or the processor may be any conventional processor or the like. Steps of the methods disclosed with reference to embodiments of this application may be directly executed and completed by a hardware decoding processor, or may be executed and completed by using a combination of hardware and software modules in the decoding processor. The software module may be located in a mature storage medium in the art, for example, a random access memory, a flash memory, a read-only memory, a programmable read-only memory, an electrically erasable programmable memory, or a register. The storage medium is located in the memory 1004, and the processor 1003 reads information in the memory 1004 and completes the steps in the foregoing methods in combination with hardware of the processor 1003.

The receiver 1001 may be configured to receive input digital or character information, and generate a signal input related to setting and function control of the execution device. The transmitter 1002 may be configured to output digital or character information by using a first interface. The transmitter 1002 may be further configured to send instructions to a disk group by using the first interface, to modify data in the disk group. The transmitter 1002 may further include a display device such as a display.

In this embodiment of this application, in a case, the processor 1003 is configured to perform image object detection on an image by using the image classification model in the embodiment corresponding to FIG. 4.

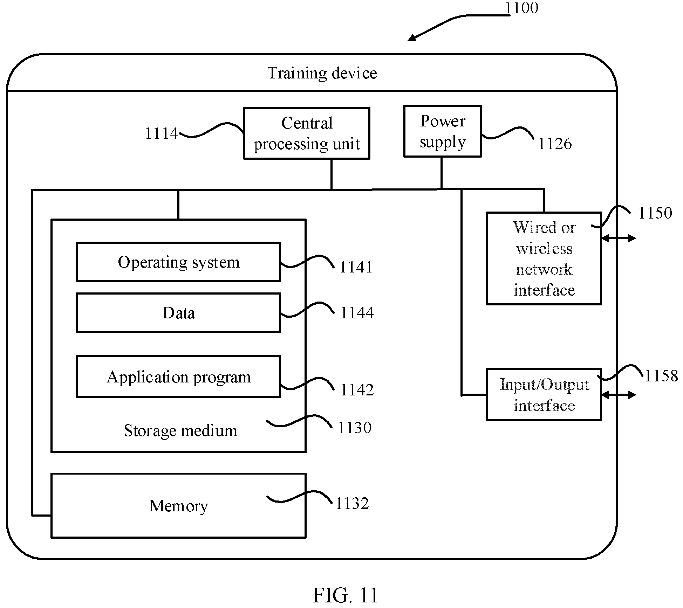

An embodiment of this application further relates to a training device. FIG. 11 is a schematic diagram of a structure of a training device according to an embodiment of this application. As shown in FIG. 11, a training device 1100 is implemented by one or more servers. The training device 1100 may have a large difference due to different configurations or performance, and may include one or more central processing units (central processing units, CPU) 1114 (for example, one or more processors) and a memory 1132, and one or more storage media 1130 (for example, one or more mass storage devices) that store an application program 1142 or data 1144. The memory 1132 and the storage medium 1130 may perform transitory storage or persistent storage. A program stored in the storage medium 1130 may include one or more modules (not shown in the figure), and each module may include a series of instruction operations for the training device. Further, the central processing unit 1114 may be configured to communicate with the storage medium 1130, and perform, on the training device 1100, the series of instruction operations in the storage medium 1130.

The training device 1100 may further include one or more power supplies 1126, one or more wired or wireless network interfaces 1150, one or more input/output interfaces 1158, or one or more operating systems 1141, for example, Windows Server^{™}, Mac OS X^{™}, Unix^{™}, Linux^{™}, and FreeBSD^{™}.

Specifically, the training device may perform the model training method in the embodiment corresponding to FIG. 7.

An embodiment of this application further relates to a computer-readable storage medium. The computer-readable storage medium stores a program used for signal processing. When the program is run on a computer, the computer is enabled to perform the steps performed by the foregoing execution device, or the computer is enabled to perform the steps performed by the foregoing training device.

An embodiment of this application further relates to a computer program product. The computer program product stores instructions. When the instructions are executed by a computer, the computer is enabled to perform the steps performed by the foregoing execution device, or the computer is enabled to perform the steps performed by the foregoing training device.

The execution device, the training device, or the terminal device in embodiments of this application may be specifically a chip. The chip includes a processing unit and a communication unit. The processing unit may be, for example, a processor. The communication unit may be, for example, an input/output interface, a pin, or a circuit. The processing unit may execute computer-executable instructions stored in a storage unit, so that a chip in the execution device performs the data processing method described in the foregoing embodiments, or a chip in the training device performs the data processing method described in the foregoing embodiments. Optionally, the storage unit is a storage unit in the chip, for example, a register or a cache. Alternatively, the storage unit may be a storage unit in a wireless access device but outside the chip, for example, a read-only memory (read-only memory, ROM), another type of static storage device that can store static information and instructions, or a random access memory (random access memory, RAM).

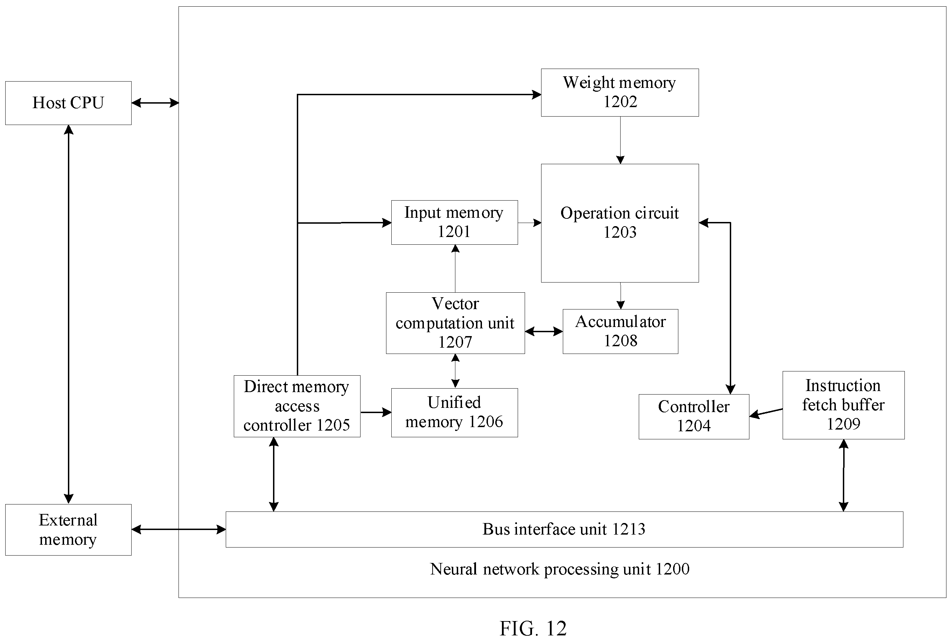

Specifically, FIG. 12 is a schematic diagram of a structure of a chip according to an embodiment of this application. The chip may be represented as a neural network processing unit NPU 1200. The NPU 1200 is mounted to a host CPU (Host CPU) as a coprocessor, and the host CPU allocates a task. A core part of the NPU is an operation circuit 1203, and a controller 1204 controls the operation circuit 1203 to extract matrix data in a memory and perform a multiplication operation.

In some implementations, the operation circuit 1203 includes a plurality of process engines (Process Engine, PE) inside. In some implementations, the operation circuit 1203 is a two-dimensional systolic array. The operation circuit 1203 may alternatively be a one-dimensional systolic array or another electronic circuit capable of performing mathematical operations such as multiplication and addition. In some implementations, the operation circuit 1203 is a general-purpose matrix processor.

For example, it is assumed that there is an input matrix A, a weight matrix B, and an output matrix C. The operation circuit fetches, from a weight memory 1202, data corresponding to the matrix B, and caches the data on each PE in the operation circuit. The operation circuit fetches data of the matrix A from an input memory 1201, to perform a matrix operation on the matrix B, and stores an obtained partial result or an obtained final result of the matrix in an accumulator (accumulator) 1208.

A unified memory 1206 is configured to store input data and output data. The weight data is directly transferred to the weight memory 1202 by using a direct memory access controller (Direct Memory Access Controller, DMAC) 1205. The input data is also transferred to the unified memory 1206 by using the DMAC.

A BIU is a bus interface unit, namely, a bus interface unit 1213, and is configured to perform interaction between an AXI bus and the DMAC and between the AXI bus and an instruction fetch buffer (Instruction Fetch Buffer, IFB) 1209.

The bus interface unit (Bus Interface Unit, BIU for short) 1213 is used by the instruction fetch buffer 1209 to obtain instructions from an external memory, and is further used by the direct memory access controller 1205 to obtain original data of the input matrix A or the weight matrix B from the external memory.

The DMAC is mainly configured to transfer input data in the external memory DDR to the unified memory 1206, transfer weight data to the weight memory 1202, or transfer input data to the input memory 1201.

A vector computation unit 1207 includes a plurality of operation processing units; and if necessary, perform further processing such as vector multiplication, vector addition, an exponential operation, a logarithmic operation, or value comparison on an output of the operation circuit 1203. The vector computation unit 1207 is mainly configured to perform network computation, such as batch normalization (batch normalization), pixel-level summation, or upsampling on a prediction label plane, at a non-convolutional/fully connected layer in a neural network.

In some implementations, the vector computation unit 1207 can store a processed output vector in the unified memory 1206. For example, the vector computation unit 1207 may apply a linear function or a nonlinear function to the output of the operation circuit 1203, for example, perform linear interpolation on a prediction label plane extracted at a convolutional layer. For another example, the linear function or the nonlinear function is applied to a vector of an accumulated value to generate an activation value. In some implementations, the vector computation unit 1207 generates a normalized value, a pixel-level summation value, or both. In some implementations, the processed output vector can be used as an activated input to the operation circuit 1203, for example, the processed output vector can be used at a subsequent layer of the neural network.

The instruction fetch buffer (instruction fetch buffer) 1209 connected to the controller 1204 is configured to store instructions used by the controller 1204.

The unified memory 1206, the input memory 1201, the weight memory 1202, and the instruction fetch buffer 1209 are all on-chip memories. The external memory is private for a hardware architecture of the NPU.

The processor mentioned above may be a general-purpose central processing unit, a microprocessor, an ASIC, or one or more integrated circuits for controlling program execution.

In addition, it should be noted that the apparatus embodiments described above are merely an example. The units described as separate parts may or may not be physically separate, and parts displayed as units may or may not be physical units, may be located in one position, or may be distributed on a plurality of network units. Some or all of the modules may be selected based on actual requirements to achieve the objectives of the solutions of embodiments. In addition, in the accompanying drawings of the apparatus embodiments provided by this application, connection relationships between modules indicate that the modules have communication connections with each other, which may be specifically implemented as one or more communication buses or signal cables.

Based on the description of the foregoing implementations, a person skilled in the art may clearly understand that this application may be implemented by software in addition to necessary universal hardware, or by dedicated hardware, including a dedicated integrated circuit, a dedicated CPU, a dedicated memory, a dedicated component, and the like. Usually, any function implemented by a computer program may be easily implemented by using corresponding hardware. In addition, specific hardware structures used to implement a same function may be various, for example, an analog circuit, a digital circuit, or a dedicated circuit. However, in this application, a software program implementation is a better implementation in most cases. Based on such an understanding, the technical solutions of this application essentially or the part contributing to the conventional technology may be implemented in a form of a software product. The computer software product is stored in a readable storage medium, such as a floppy disk, a USB flash drive, a removable hard disk, a ROM, a RAM, a magnetic disk, or an optical disc of a computer, and includes several instructions for instructing a computer device (which may be a personal computer, a training device, or a network device) to perform the methods in embodiments of this application.

All or some of the foregoing embodiments may be implemented by software, hardware, firmware, or any combination thereof. When software is used to implement the embodiments, all or some of the embodiments may be implemented in a form of a computer program product.

The computer program product includes one or more computer instructions. When the computer program instructions are loaded and executed on a computer, the procedures or functions according to embodiments of this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, training device, or data center to another website, computer, training device, or data center in a wired (for example, a coaxial cable, an optical fiber, or a digital subscriber line (DSL)) or wireless (for example, infrared, radio, or microwave) manner. The computer-readable storage medium may be any usable medium accessible by the computer, or a data storage device, such as a training device or a data center, integrating one or more usable media. The usable medium may be a magnetic medium (for example, a floppy disk, a hard disk, or a magnetic tape), an optical medium (for example, a DVD), a semiconductor medium (for example, a solid state drive (Solid State Drive, SSD)), or the like.

## Claims

1. A computer-implemented image classification method, wherein the method is implemented by using an image classification model, and the method comprises:
obtaining (401), by a first feature extraction module of the image classification model, first features of reference images of a plurality of categories, and, by a second feature extraction module of the image classification model, by dividing a to-be-classified image into image subblocks and extracting second features from the respective image subblocks, second features of the to-be-classified image;
generating (402), by a feature fusion module of the image classification model, a plurality of third features, each based on a pair of one of the first features and the second feature of one of the image subblocks, by performing feature fusion processing on said one of the first features and said one of the second features to obtain the respective third feature, wherein the feature fusion processing comprises at least one of addition processing, multiplication processing, subtraction processing, concatenation processing, and concatenation convolution processing;
generating (403), by a first classification module of the image classification model, for each of the first features, a first classification result based on this first feature, wherein the first classification result comprises a category probability distribution of the respective reference image comprising, for each of the categories, a probability that the respective reference image belongs to this category, and thereby allowing to determine a category of the respective reference image as a category with a largest probability;
generating (404), by a second classification module of the image classification model, for each of the third features, a second classification result based on this third feature, wherein the second classification result is a classification result under the action of the respective reference image and comprises, for each of the categories, a probability that the respective image subblock belongs to this category; and
generating (405), by a classification result adjustment module of the image classification model, for each of the image subblocks, third classification results of the image subblock based on the first classification results of all the reference images and the second classification results calculated for the image subblock, by performing, for each image subblock and for each of the reference images, addition processing on the corresponding second classification result and the corresponding first classification result to obtain the third classification result, wherein the third classification results are used to determine a category of the to-be-classified image.

2. A computer-implemented image classification method, wherein the method is implemented by using an image classification model, and the method comprises:
obtaining (401), by a first feature extraction module of the image classification model, first features of reference images of a plurality of categories, and, by a second feature extraction module of the image classification model, by dividing a to-be-classified image into image subblocks and extracting second features from the respective image subblocks, second features of the to-be-classified image;
generating (402), by a feature fusion module of the image classification model, a plurality of third features, each based on a pair of one of the first features and the second feature of one of the image subblocks, by performing feature fusion processing on said one of the first features and said one of the second features to obtain the respective third feature, wherein the feature fusion processing comprises at least one of addition processing, multiplication processing, subtraction processing, concatenation processing, and concatenation convolution processing;
generating (403), by a first classification module of the image classification model, for each of the first features, a first classification result based on this first feature, wherein the first classification result comprises a category probability distribution of the respective reference image comprising, for each of the categories, a probability that the respective reference image belongs to this category, and thereby allowing to determine a category of the respective reference image;
generating (404), by a second classification module of the image classification model, for each of the third features, a second classification result based on this third feature, wherein the second classification result is a classification result under the action of the respective reference image and comprises, for each of the categories, a probability that the respective image subblock belongs to this category; and
generating (405), by a classification result adjustment module of the image classification model, third classification results which are used to determine a category of the to-be-classified image, wherein said generating (405), by the classification result adjustment module of the image classification model, comprises:
generating, for each of the image subblocks, fourth classification results of the image subblock based on the first classification results of all the reference images and the second classification results calculated for the image subblock, by performing, for each image subblock and for each of the reference images, addition processing on the corresponding second classification result and the corresponding first classification result to obtain the fourth classification result,
performing, for each of the image subblocks, addition processing on the first classification result and a model parameter of the image classification model to obtain a respective fifth classification result;
performing, for each of the image subblocks, multiplication processing on the fifth classification result and a preset weight parameter to obtain a sixth classification result; and
performing subtraction processing on each of the fourth classification results and the corresponding from the sixth classification results to obtain the third classification results.

3. The method according to claim 1 or 2, wherein the obtaining a first feature of a reference image and a second feature of a to-be-classified image comprises:
performing feature extraction processing on the reference image to obtain the first feature.

4. An image classification apparatus, wherein the apparatus comprises:
a feature extraction module (801), configured to obtain first features of reference images of a plurality of categories, and configured to divide a to-be-classified image into image subblocks and extract second features from the respective image subblocks to obtain second features of the to-be-classified image;
a feature fusion module (802), configured to generate a plurality of third features, each based on a pair of one of the first features and the second feature of one of the image subblocks, by performing feature fusion processing on said one of the first features and said one of the second features to obtain the respective third feature, wherein the feature fusion processing comprises at least one of addition processing, multiplication processing, subtraction processing, concatenation processing, and concatenation convolution processing;
a first classification module (803), configured to generate, for each of the first features, a first classification result based on this first feature, wherein the first classification result comprises a category probability distribution of the respective reference image comprising, for each of the categories, a probability that the respective reference image belongs to this category, thereby allowing to be used to determine a category of the respective reference image;
a second classification module (804), configured to generate, for each of the third features, a second classification result based on this third feature, wherein the second classification result is a classification result under the action of the respective reference image and comprises, for each of the categories, a probability that the respective image subblock belongs to this category; and
a classification result adjustment module (805), configured to generate, for each of the image subblocks, third classification results of the image subblock based on the first classification results of all the reference images and the second classification results calculated for the image subblock, by performing, for each image subblock and for each of the reference images, addition processing on the corresponding second classification result and the corresponding first classification result to obtain the third classification result, wherein the third classification result is to be used to determine a category of the to-be-classified image.

5. An image classification apparatus, wherein the apparatus comprises:
a feature extraction module (801), configured to obtain first features of reference images of a plurality of categories, and configured to divide a to-be-classified image into image subblocks and extract second features from the respective image subblocks to obtain second features of the to-be-classified image;
a feature fusion module (802), configured to generate a plurality of third features, each based on a pair of one of the first features and the second feature of one of the image subblocks, by performing feature fusion processing on said one of the first features and said one of the second features to obtain the respective third feature, wherein the feature fusion processing comprises at least one of addition processing, multiplication processing, subtraction processing, concatenation processing, and concatenation convolution processing;
a first classification module (803), configured to generate, for each of the first features, a first classification result based on this first feature, wherein the first classification result comprises a category probability distribution of the respective reference image comprising, for each of the categories, a probability that the respective reference image belongs to this category, and thereby allowing to determine a category of the respective reference image;
a second classification module (804), configured to generate, for each of the third features, a second classification result based on this third feature, wherein the second classification result is a classification result under the action of the respective reference image and comprises, for each of the categories, a probability that the respective image subblock belongs to this category; and
a classification result adjustment module (805), configured to generate third classification results which are to be used to determine a category of the to-be-classified image, wherein the generation by the classification result adjustment module (805) comprises:
generating, for each of the image subblocks, fourth classification results of the image subblock based on the first classification results of all the reference images and the second classification results calculated for the image subblock, by performing, for each image subblock and for each of the reference images, addition processing on the corresponding second classification result and the corresponding first classification result to obtain the fourth classification result,
performing, for each of the image subblocks, addition processing on the first classification result and a model parameter of the image classification model to obtain a respective fifth classification result;
performing, for each of the image subblocks, multiplication processing on the fifth classification result and a preset weight parameter to obtain a sixth classification result; and
performing subtraction processing on each of the fourth classification results and the corresponding from the sixth classification results to obtain the third classification results.

6. A computer storage medium, wherein the computer storage medium stores one or more instructions, and when the one or more instructions are executed by one or more computers, the one or more computers are enabled to perform the method according to any one of claims 1 to 3.

7. A computer program product, wherein the computer program product stores instructions, and when the instructions are executed by a computer, the computer is enabled to perform the method according to any one of claims 1 to 3.

## Patentansprüche

1. Computerimplementiertes Bildklassifizierungsverfahren, wobei das Verfahren unter Verwendung eines Bildklassifizierungsmodells implementiert wird, und das Verfahren Folgendes umfasst:
Erhalten (401), durch ein erstes Merkmalsextraktionsmodul des Bildklassifizierungsmodells, erster Merkmale von Referenzbildern einer Vielzahl von Kategorien, und, durch ein zweites Merkmalsextraktionsmodul des Bildklassifizierungsmodells, durch Unterteilen eines zu klassifizierenden Bildes in Bildteilblöcke und Extrahieren zweiter Merkmale aus den jeweiligen Bildteilblöcken, zweiter Merkmale des zu klassifizierenden Bildes;
Erzeugen (402), durch ein Merkmalsfusionsmodul des Bildklassifizierungsmodells, einer Vielzahl von dritten Merkmalen, die jeweils auf einem Paar aus einem der ersten Merkmale und dem zweiten Merkmal eines der Bildteilblöcke basieren, indem eine Merkmalsfusionsverarbeitung an dem einen der ersten Merkmale und dem einen der zweiten Merkmale durchgeführt wird, um das jeweilige dritte Merkmal zu erhalten, wobei die Merkmalsfusionsverarbeitung mindestens eine von einer Additionsverarbeitung, einer Multiplikationsverarbeitung, einer Subtraktionsverarbeitung, einer Verkettungsverarbeitung und einer Verkettungsfaltungsverarbeitung umfasst;
Erzeugen (403), durch ein erstes Klassifizierungsmodul des Bildklassifizierungsmodells, für jedes der ersten Merkmale, eines ersten Klassifizierungsergebnisses basierend auf diesem ersten Merkmal, wobei das erste Klassifizierungsergebnis eine Kategoriewahrscheinlichkeitsverteilung des jeweiligen Referenzbildes umfasst, die für jede der Kategorien eine Wahrscheinlichkeit umfasst, dass das jeweilige Referenzbild zu dieser Kategorie gehört, und dadurch Ermöglichen, eine Kategorie des jeweiligen Referenzbildes als eine Kategorie mit einer größten Wahrscheinlichkeit zu bestimmen;
Erzeugen (404), durch ein zweites Klassifizierungsmodul des Bildklassifizierungsmodells, für jedes der dritten Merkmale, eines zweiten Klassifizierungsergebnisses basierend auf diesem dritten Merkmal, wobei das zweite Klassifizierungsergebnis ein Klassifizierungsergebnis unter der Wirkung des jeweiligen Referenzbildes ist und für jede der Kategorien eine Wahrscheinlichkeit umfasst, dass der jeweilige Bildteilblock zu dieser Kategorie gehört; und Erzeugen (405), durch ein Klassifizierungsergebnis-Anpassungsmodul des Bildklassifizierungsmodells, für jeden der Bildteilblöcke, dritter Klassifizierungsergebnisse des Bildteilblocks basierend auf den ersten Klassifizierungsergebnissen aller Referenzbilder und den für den Bildteilblock berechneten zweiten Klassifizierungsergebnissen, indem für jeden Bildteilblock und für jedes der Referenzbilder eine Additionsverarbeitung an dem entsprechenden zweiten Klassifizierungsergebnis und dem entsprechenden ersten Klassifizierungsergebnis durchgeführt wird, um das dritte Klassifizierungsergebnis zu erhalten, wobei die dritten Klassifizierungsergebnisse verwendet werden, um eine Kategorie des zu klassifizierenden Bildes zu bestimmen.

2. Computerimplementiertes Bildklassifizierungsverfahren, wobei das Verfahren unter Verwendung eines Bildklassifizierungsmodells implementiert wird, und das Verfahren Folgendes umfasst:
Erhalten (401), durch ein erstes Merkmalsextraktionsmodul des Bildklassifizierungsmodells, erster Merkmale von Referenzbildern einer Vielzahl von Kategorien, und, durch ein zweites Merkmalsextraktionsmodul des Bildklassifizierungsmodells, durch Unterteilen eines zu klassifizierenden Bildes in Bildteilblöcke und Extrahieren zweiter Merkmale aus den jeweiligen Bildteilblöcken, zweiter Merkmale des zu klassifizierenden Bildes;
Erzeugen (402), durch ein Merkmalsfusionsmodul des Bildklassifizierungsmodells, einer Vielzahl von dritten Merkmalen, die jeweils auf einem Paar aus einem der ersten Merkmale und dem zweiten Merkmal eines der Bildteilblöcke basieren, indem eine Merkmalsfusionsverarbeitung an dem einen der ersten Merkmale und dem einen der zweiten Merkmale durchgeführt wird, um das jeweilige dritte Merkmal zu erhalten, wobei die Merkmalsfusionsverarbeitung mindestens eine von einer Additionsverarbeitung, einer Multiplikationsverarbeitung, einer Subtraktionsverarbeitung, einer Verkettungsverarbeitung und einer Verkettungsfaltungsverarbeitung umfasst;
Erzeugen (403), durch ein erstes Klassifizierungsmodul des Bildklassifizierungsmodells, für jedes der ersten Merkmale, eines ersten Klassifizierungsergebnisses basierend auf diesem ersten Merkmal, wobei das erste Klassifizierungsergebnis eine Kategoriewahrscheinlichkeitsverteilung des jeweiligen Referenzbildes umfasst, die für jede der Kategorien eine Wahrscheinlichkeit umfasst, dass das jeweilige Referenzbild zu dieser Kategorie gehört, und dadurch Ermöglichen, eine Kategorie des jeweiligen Referenzbildes zu bestimmen;
Erzeugen (404), durch ein zweites Klassifizierungsmodul des Bildklassifizierungsmodells, für jedes der dritten Merkmale, eines zweiten Klassifizierungsergebnisses basierend auf diesem dritten Merkmal, wobei das zweite Klassifizierungsergebnis ein Klassifizierungsergebnis unter der Wirkung des jeweiligen Referenzbildes ist und für jede der Kategorien eine Wahrscheinlichkeit umfasst, dass der jeweilige Bildteilblock zu dieser Kategorie gehört; und Erzeugen (405), durch ein Klassifizierungsergebnis-Anpassungsmodul des Bildklassifizierungsmodells, dritter Klassifizierungsergebnisse, die verwendet werden, um eine Kategorie des zu klassifizierenden Bildes zu bestimmen, wobei das Erzeugen (405), durch das Klassifizierungsergebnis-Anpassungsmodul des Bildklassifizierungsmodells, Folgendes umfasst:
Erzeugen, für jeden der Bildteilblöcke, vierter Klassifizierungsergebnisse des Bildteilblocks basierend auf den ersten Klassifizierungsergebnissen aller Referenzbilder und den für den Bildteilblock berechneten zweiten Klassifizierungsergebnissen, indem für jeden Bildteilblock und für jedes der Referenzbilder eine Additionsverarbeitung an dem entsprechenden zweiten Klassifizierungsergebnis und dem entsprechenden ersten Klassifizierungsergebnis durchgeführt wird, um das vierte Klassifizierungsergebnis zu erhalten,
Durchführen, für jeden der Bildteilblöcke, einer Additionsverarbeitung an dem ersten Klassifizierungsergebnis und einem Modellparameter des Bildklassifizierungsmodells, um ein jeweiliges fünftes Klassifizierungsergebnis zu erhalten;
Durchführen, für jeden der Bildteilblöcke, einer Multiplikationsverarbeitung an dem fünften Klassifizierungsergebnis und einem voreingestellten Gewichtsparameter, um ein sechstes Klassifizierungsergebnis zu erhalten; und
Durchführen einer Subtraktionsverarbeitung an jedem der vierten Klassifizierungsergebnisse und dem entsprechenden aus den sechsten Klassifizierungsergebnissen, um die dritten Klassifizierungsergebnisse zu erhalten.

3. Verfahren nach Anspruch 1 oder 2, wobei das Erhalten eines ersten Merkmals eines Referenzbildes und eines zweiten Merkmals eines zu klassifizierenden Bildes Folgendes umfasst:
Durchführen einer Merkmalsextraktionsverarbeitung an dem Referenzbild, um das erste Merkmal zu erhalten.

4. Bildklassifizierungseinrichtung, wobei die Einrichtung Folgendes umfasst:
ein Merkmalsextraktionsmodul (801), das konfiguriert ist, um erste Merkmale von Referenzbildern einer Vielzahl von Kategorien zu erhalten, und konfiguriert ist, um ein zu klassifizierendes Bild in Bildteilblöcke zu unterteilen und zweite Merkmale aus den jeweiligen Bildteilblöcken zu extrahieren, um zweite Merkmale des zu klassifizierenden Bildes zu erhalten;
ein Merkmalsfusionsmodul (802), das konfiguriert ist, um eine Vielzahl von dritten Merkmalen zu erzeugen, die jeweils auf einem Paar aus einem der ersten Merkmale und dem zweiten Merkmal eines der Bildteilblöcke basieren, indem eine Merkmalsfusionsverarbeitung an dem einen der ersten Merkmale und dem einen der zweiten Merkmale durchgeführt wird, um das jeweilige dritte Merkmal zu erhalten, wobei die Merkmalsfusionsverarbeitung mindestens eines von Additionsverarbeitung, Multiplikationsverarbeitung, Subtraktionsverarbeitung, Verkettungsverarbeitung und Verkettungsfaltungsverarbeitung umfasst;
ein erstes Klassifizierungsmodul (803), das konfiguriert ist, um für jedes der ersten Merkmale ein erstes Klassifizierungsergebnis basierend auf diesem ersten Merkmal zu erzeugen, wobei das erste Klassifizierungsergebnis eine Kategoriewahrscheinlichkeitsverteilung des jeweiligen Referenzbildes umfasst, die für jede der Kategorien eine Wahrscheinlichkeit umfasst, dass das jeweilige Referenzbild zu dieser Kategorie gehört, wodurch ermöglicht wird, dass sie verwendet wird, um eine Kategorie des jeweiligen Referenzbildes zu bestimmen;
ein zweites Klassifizierungsmodul (804), das konfiguriert ist, um für jedes der dritten Merkmale ein zweites Klassifizierungsergebnis basierend auf diesem dritten Merkmal zu erzeugen, wobei das zweite Klassifizierungsergebnis ein Klassifizierungsergebnis unter der Wirkung des jeweiligen Referenzbildes ist und für jede der Kategorien eine Wahrscheinlichkeit umfasst, dass der jeweilige Bildteilblock zu dieser Kategorie gehört; und
ein Klassifizierungsergebnis-Anpassungsmodul (805), das konfiguriert ist, um für jeden der Bildteilblöcke dritte Klassifizierungsergebnisse des Bildteilblocks basierend auf den ersten Klassifizierungsergebnissen aller Referenzbilder und den für den Bildteilblock berechneten zweiten Klassifizierungsergebnissen zu erzeugen, indem für jeden Bildteilblock und für jedes der Referenzbilder eine Additionsverarbeitung an dem entsprechenden zweiten Klassifizierungsergebnis und dem entsprechenden ersten Klassifizierungsergebnis durchgeführt wird, um das dritte Klassifizierungsergebnis zu erhalten, wobei das dritte Klassifizierungsergebnis zu verwenden ist, um eine Kategorie des zu klassifizierenden Bildes zu bestimmen.

5. Bildklassifizierungseinrichtung, wobei die Einrichtung Folgendes umfasst:
ein Merkmalsextraktionsmodul (801), das konfiguriert ist, um erste Merkmale von Referenzbildern einer Vielzahl von Kategorien zu erhalten, und konfiguriert ist, um ein zu klassifizierendes Bild in Bildteilblöcke zu unterteilen und zweite Merkmale aus den jeweiligen Bildteilblöcken zu extrahieren, um zweite Merkmale des zu klassifizierenden Bildes zu erhalten;
ein Merkmalsfusionsmodul (802), das konfiguriert ist, um eine Vielzahl von dritten Merkmalen zu erzeugen, die jeweils auf einem Paar aus einem der ersten Merkmale und dem zweiten Merkmal eines der Bildteilblöcke basieren, indem eine Merkmalsfusionsverarbeitung an dem einen der ersten Merkmale und dem einen der zweiten Merkmale durchgeführt wird, um das jeweilige dritte Merkmal zu erhalten, wobei die Merkmalsfusionsverarbeitung mindestens eines von Additionsverarbeitung, Multiplikationsverarbeitung, Subtraktionsverarbeitung, Verkettungsverarbeitung und Verkettungsfaltungsverarbeitung umfasst;
ein erstes Klassifizierungsmodul (803), das konfiguriert ist, um für jedes der ersten Merkmale ein erstes Klassifizierungsergebnis basierend auf diesem ersten Merkmal zu erzeugen, wobei das erste Klassifizierungsergebnis eine
Kategoriewahrscheinlichkeitsverteilung des jeweiligen Referenzbildes umfasst, die für jede der Kategorien eine Wahrscheinlichkeit umfasst, dass das jeweilige Referenzbild zu dieser Kategorie gehört, und dadurch ermöglicht, eine Kategorie des jeweiligen Referenzbildes zu bestimmen;
ein zweites Klassifizierungsmodul (804), das konfiguriert ist, um für jedes der dritten Merkmale ein zweites Klassifizierungsergebnis basierend auf diesem dritten Merkmal zu erzeugen, wobei das zweite Klassifizierungsergebnis ein Klassifizierungsergebnis unter der Wirkung des jeweiligen Referenzbildes ist und für jede der Kategorien eine Wahrscheinlichkeit umfasst, dass der jeweilige Bildteilblock zu dieser Kategorie gehört; und
ein Klassifizierungsergebnis-Anpassungsmodul (805), das konfiguriert ist, um dritte Klassifizierungsergebnisse zu erzeugen, die zu verwenden sind, um eine Kategorie des zu klassifizierenden Bildes zu bestimmen, wobei die Erzeugung durch das Klassifizierungsergebnis-Anpassungsmodul (805) Folgendes umfasst:
Erzeugen, für jeden der Bildteilblöcke, vierter Klassifizierungsergebnisse des Bildteilblocks basierend auf den ersten Klassifizierungsergebnissen aller Referenzbilder und den für den Bildteilblock berechneten zweiten Klassifizierungsergebnissen, indem für jeden Bildteilblock und für jedes der Referenzbilder eine Additionsverarbeitung an dem entsprechenden zweiten Klassifizierungsergebnis und dem entsprechenden ersten Klassifizierungsergebnis durchgeführt wird, um das vierte Klassifizierungsergebnis zu erhalten, Durchführen, für jeden der Bildteilblöcke, einer Additionsverarbeitung an dem ersten Klassifizierungsergebnis und einem Modellparameter des Bildklassifizierungsmodells, um ein jeweiliges fünftes Klassifizierungsergebnis zu erhalten;
Durchführen, für jeden der Bildteilblöcke, einer Multiplikationsverarbeitung an dem fünften Klassifizierungsergebnis und einem voreingestellten Gewichtsparameter, um ein sechstes Klassifizierungsergebnis zu erhalten; und
Durchführen einer Subtraktionsverarbeitung an jedem der vierten Klassifizierungsergebnisse und dem entsprechenden aus den sechsten Klassifizierungsergebnissen, um die dritten Klassifizierungsergebnisse zu erhalten.

6. Computerspeichermedium, wobei auf dem Computerspeichermedium ein oder mehrere Anweisungen abgespeichert sind, und wenn die einen oder mehreren Anweisungen durch einen oder mehrere Computer ausgeführt werden, der eine oder die mehreren Computer in die Lage versetzt werden, das Verfahren nach einem der Ansprüche 1 bis 3 durchzuführen.

7. Computerprogrammprodukt, wobei das Computerprogrammprodukt Anweisungen speichert, und wenn die Anweisungen durch einen Computer ausgeführt werden, der Computer aktiviert wird, um das Verfahren nach einem der Ansprüche 1 bis 3 durchzuführen.

## Revendications

1. Procédé de classification d'images mis en œuvre par ordinateur, dans lequel le procédé est mis en œuvre en utilisant un modèle de classification d'images, et le procédé comprend :
l'obtention (401), par un premier module d'extraction de caractéristiques du modèle de classification d'images, de premières caractéristiques d'images de référence d'une pluralité de catégories et, par un second module d'extraction de caractéristiques du modèle de classification d'images, en divisant une image à classifier en sous-blocs d'image et en extrayant de deuxièmes caractéristiques des sous-blocs d'image respectifs, de deuxièmes caractéristiques de l'image à classifier ;
la génération (402), par un module de fusion de caractéristiques du modèle de classification d'images, d'une pluralité de troisièmes caractéristiques, chacune sur la base d'une paire de l'une des premières caractéristiques et de la deuxième caractéristique de l'un des sous-blocs d'image, en réalisant un traitement de fusion de caractéristiques sur ladite une des premières caractéristiques et ladite une des deuxièmes caractéristiques pour obtenir la troisième caractéristique respective, dans lequel le traitement de fusion de caractéristiques comprend au moins l'un parmi traitement d'addition, traitement de multiplication, traitement de soustraction, traitement de concaténation et traitement de convolution de concaténation ;
la génération (403), par un premier module de classification du modèle de classification d'images, pour chacune des premières caractéristiques, d'un premier résultat de classification sur la base de cette première caractéristique, dans lequel le premier résultat de classification comprend une distribution de probabilité de catégorie de l'image de référence respective comprenant, pour chacune des catégories, une probabilité que l'image de référence respective appartienne à cette catégorie, et permettant ainsi de déterminer une catégorie de l'image de référence respective comme catégorie de probabilité la plus grande ;
la génération (404), par un second module de classification du modèle de classification d'images, pour chacune des troisièmes caractéristiques, d'un deuxième résultat de classification sur la base de cette troisième caractéristique, dans lequel le deuxième résultat de classification est un résultat de classification sous l'action de l'image de référence respective et comprend, pour chacune des catégories, une probabilité que le sous-bloc d'image respectif appartienne à cette catégorie ; et
la génération (405), par un module d'ajustement de résultats de classification du modèle de classification d'images, pour chacun des sous-blocs d'image, de troisièmes résultats de classification du sous-bloc d'image sur la base des premiers résultats de classification de toutes les images de référence et des deuxièmes résultats de classification calculés pour le sous-bloc d'image, en réalisant, pour chaque sous-bloc d'image et pour chacune des images de référence, un traitement d'addition sur le deuxième résultat de classification correspondant et le premier résultat de classification correspondant pour obtenir le troisième résultat de classification, dans lequel les troisièmes résultats de classification sont utilisés pour déterminer une catégorie de l'image à classifier.

2. Procédé de classification d'images mis en œuvre par ordinateur, dans lequel le procédé est mis en œuvre en utilisant un modèle de classification d'images, et le procédé comprend :
l'obtention (401), par un premier module d'extraction de caractéristiques du modèle de classification d'images, de premières caractéristiques d'images de référence d'une pluralité de catégories et, par un second module d'extraction de caractéristiques du modèle de classification d'images, en divisant une image à classifier en sous-blocs d'image et en extrayant de deuxièmes caractéristiques des sous-blocs d'image respectifs, de deuxièmes caractéristiques de l'image à classifier ;
la génération (402), par un module de fusion de caractéristiques du modèle de classification d'images, d'une pluralité de troisièmes caractéristiques, chacune sur la base d'une paire de l'une des premières caractéristiques et de la deuxième caractéristique de l'un des sous-blocs d'image, en réalisant un traitement de fusion de caractéristiques sur ladite une des premières caractéristiques et ladite une des deuxièmes caractéristiques pour obtenir la troisième caractéristique respective, dans lequel le traitement de fusion de caractéristiques comprend au moins l'un parmi traitement d'addition, traitement de multiplication, traitement de soustraction, traitement de concaténation et traitement de convolution de concaténation ;
la génération (403), par un premier module de classification du modèle de classification d'images, pour chacune des premières caractéristiques, d'un premier résultat de classification sur la base de cette première caractéristique, dans lequel le premier résultat de classification comprend une distribution de probabilité de catégorie de l'image de référence respective comprenant, pour chacune des catégories, une probabilité que l'image de référence respective appartienne à cette catégorie, et permettant ainsi de déterminer une catégorie de l'image de référence respective ;
la génération (404), par un second module de classification du modèle de classification d'images, pour chacune des troisièmes caractéristiques, d'un deuxième résultat de classification sur la base de cette troisième caractéristique, dans lequel le deuxième résultat de classification est un résultat de classification sous l'action de l'image de référence respective et comprend, pour chacune des catégories, une probabilité que le sous-bloc d'image respectif appartienne à cette catégorie ; et
la génération (405), par un module d'ajustement de résultats de classification du modèle de classification d'images, de troisièmes résultats de classification qui sont utilisés pour déterminer une catégorie de l'image à classifier, dans lequel ladite génération (405), par le module d'ajustement de résultats de classification du modèle de classification d'images, comprend :
la génération, pour chacun des sous-blocs d'image, de quatrièmes résultats de classification du sous-bloc d'image sur la base des premiers résultats de classification de toutes les images de référence et des deuxièmes résultats de classification calculés pour le sous-bloc d'image, en réalisant, pour chaque sous-bloc d'image et pour chacune des images de référence, un traitement d'addition sur le deuxième résultat de classification correspondant et le premier résultat de classification correspondant pour obtenir le quatrième résultat de classification,
la réalisation, pour chacun des sous-blocs d'image, d'un traitement d'addition sur le premier résultat de classification et un paramètre de modèle du modèle de classification d'images pour obtenir un cinquième résultat de classification respectif ;
la réalisation, pour chacun des sous-blocs d'image, d'un traitement de multiplication sur le cinquième résultat de classification et un paramètre de pondération prédéfini pour obtenir un sixième résultat de classification ; et
la réalisation d'un traitement de soustraction sur chacun des quatrièmes résultats de classification et les sixièmes résultats de classification correspondants pour obtenir les troisièmes résultats de classification.

3. Procédé selon la revendication 1 ou 2, dans lequel l'obtention d'une première caractéristique d'une image de référence et d'une deuxième caractéristique d'une image à classifier comprend :
la réalisation d'un traitement d'extraction de caractéristiques sur l'image de référence pour obtenir la première caractéristique.

4. Appareil de classification d'images, dans lequel l'appareil comprend :
un module d'extraction de caractéristiques (801), configuré pour obtenir de premières caractéristiques d'images de référence d'une pluralité de catégories et configuré pour diviser une image à classifier en sous-blocs d'image et extraire de deuxièmes caractéristiques des sous-blocs d'image respectifs pour obtenir de deuxièmes caractéristiques de l'image à classifier ;
un module de fusion de caractéristiques (802), configuré pour générer une pluralité de troisièmes caractéristiques, chacune sur la base d'une paire de l'une des premières caractéristiques et de la deuxième caractéristique de l'un des sous-blocs d'image, en réalisant un traitement de fusion de caractéristiques sur ladite une des premières caractéristiques et ladite une des deuxièmes caractéristiques pour obtenir la troisième caractéristique respective, dans lequel le traitement de fusion de caractéristiques comprend au moins l'un parmi traitement d'addition, traitement de multiplication, traitement de soustraction, traitement de concaténation et traitement de convolution de concaténation ;
un premier module de classification (803), configuré pour générer, pour chacune des premières caractéristiques, un premier résultat de classification sur la base de cette première caractéristique, dans lequel le premier résultat de classification comprend une distribution de probabilité de catégorie de l'image de référence respective comprenant, pour chacune des catégories, une probabilité que l'image de référence respective appartienne à cette catégorie, et permettant ainsi son utilisation pour déterminer une catégorie de l'image de référence respective ;
un second module de classification (804), configuré pour générer, pour chacune des troisièmes caractéristiques, un deuxième résultat de classification sur la base de cette troisième caractéristique, dans lequel le deuxième résultat de classification est un résultat de classification sous l'action de l'image de référence respective et comprend, pour chacune des catégories, une probabilité que le sous-bloc d'image respectif appartienne à cette catégorie ; et
un module d'ajustement de résultats de classification (805), configuré pour générer, pour chacun des sous-blocs d'image, de troisièmes résultats de classification du sous-bloc d'image sur la base des premiers résultats de classification de toutes les images de référence et des deuxièmes résultats de classification calculés pour le sous-bloc d'image, en réalisant, pour chaque sous-bloc d'image et pour chacune des images de référence, un traitement d'addition sur le deuxième résultat de classification correspondant et le premier résultat de classification correspondant pour obtenir le troisième résultat de classification, dans lequel le troisième résultat de classification doit être utilisé pour déterminer une catégorie de l'image à classifier.

5. Appareil de classification d'images, dans lequel l'appareil comprend :
un module d'extraction de caractéristiques (801), configuré pour obtenir de premières caractéristiques d'images de référence d'une pluralité de catégories et configuré pour diviser une image à classifier en sous-blocs d'image et extraire de deuxièmes caractéristiques des sous-blocs d'image respectifs pour obtenir de deuxièmes caractéristiques de l'image à classifier ;
un module de fusion de caractéristiques (802), configuré pour générer une pluralité de troisièmes caractéristiques, chacune sur la base d'une paire de l'une des premières caractéristiques et de la deuxième caractéristique de l'un des sous-blocs d'image, en réalisant un traitement de fusion de caractéristiques sur ladite une des premières caractéristiques et ladite une des deuxièmes caractéristiques pour obtenir la troisième caractéristique respective, dans lequel le traitement de fusion de caractéristiques comprend au moins l'un parmi traitement d'addition, traitement de multiplication, traitement de soustraction, traitement de concaténation et traitement de convolution de concaténation ;
un premier module de classification (803), configuré pour générer, pour chacune des premières caractéristiques, un premier résultat de classification sur la base de cette première caractéristique, dans lequel le premier résultat de classification comprend une distribution de probabilité de catégorie de l'image de référence respective comprenant, pour chacune des catégories, une probabilité que l'image de référence respective appartienne à cette catégorie, et permettant ainsi de déterminer une catégorie de l'image de référence respective ;
un second module de classification (804), configuré pour générer, pour chacune des troisièmes caractéristiques, un deuxième résultat de classification sur la base de cette troisième caractéristique, dans lequel le deuxième résultat de classification est un résultat de classification sous l'action de l'image de référence respective et comprend, pour chacune des catégories, une probabilité que le sous-bloc d'image respectif appartienne à cette catégorie ; et
un module d'ajustement de résultats de classification (805), configuré pour générer de troisièmes résultats de classification qui doivent être utilisés pour déterminer une catégorie de l'image à classifier, dans lequel la génération par le module d'ajustement de résultats de classification (805) comprend :
la génération, pour chacun des sous-blocs d'image, de quatrièmes résultats de classification du sous-bloc d'image sur la base des premiers résultats de classification de toutes les images de référence et des deuxièmes résultats de classification calculés pour le sous-bloc d'image, en réalisant, pour chaque sous-bloc d'image et pour chacune des images de référence, un traitement d'addition sur le deuxième résultat de classification correspondant et le premier résultat de classification correspondant pour obtenir le quatrième résultat de classification,
la réalisation, pour chacun des sous-blocs d'image, d'un traitement d'addition sur le premier résultat de classification et un paramètre de modèle du modèle de classification d'images pour obtenir un cinquième résultat de classification respectif ;
la réalisation, pour chacun des sous-blocs d'image, d'un traitement de multiplication sur le cinquième résultat de classification et un paramètre de pondération prédéfini pour obtenir un sixième résultat de classification ; et
la réalisation d'un traitement de soustraction sur chacun des quatrièmes résultats de classification et les sixièmes résultats de classification correspondants pour obtenir les troisièmes résultats de classification.

6. Support de stockage informatique, dans lequel le support de stockage informatique stocke une ou plusieurs instructions et, lorsque la ou les instructions sont exécutées par un ou plusieurs ordinateurs, le ou les ordinateurs sont en mesure de réaliser le procédé selon l'une quelconque des revendications 1 à 3.

7. Produit-programme d'ordinateur, dans lequel le produit-programme d'ordinateur stocke des instructions et, lorsque les instructions sont exécutées par un ordinateur, l'ordinateur est en mesure de réaliser le procédé selon l'une quelconque des revendications 1 à 3.
